Europäisches Patentamt

European Patent Office

Office européen des brevets

(19)

(11) **EP 1 424 609 A2**

(12) **EUROPEAN PATENT APPLICATION**

(43) Date of publication:
02.06.2004 Bulletin 2004/23

(51) Int Cl.$^7$: **G03G 15/01**, H04N 1/50

(21) Application number: **03018613.4**

(22) Date of filing: **19.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.08.2002 JP 2002239622**

(71) Applicant: **Ricoh Company, Ltd.**
**Tokyo 143-8555 (JP)**

(72) Inventors:
• **Bannai, Kazunori**
  **Ohta-ku Tokyo 143-8555 (JP)**
• **Yamazaki, Kozo**
  **Ohta-ku Tokyo 143-8555 (JP)**

(74) Representative: **Schwabe - Sandmair - Marx**
**Stuntzstrasse 16**
**81677 München (DE)**

(54) **Color shift correcting method, optical writing device and image forming apparatus**

(57)     A color shift correcting method is provided for accurately correcting a color shift caused by fluctuations in the rotational speed of an image carrier or an intermediate transfer belt at a low cost without the need for employing a driving motor rotation controller or an encoder. In an image forming apparatus, images in different colors are formed by at least one image forming unit having an image carrier. The images in different colors are directly or indirectly transferred onto a movable element to form a final image. A position irradiated with a laser beam emitted from an optical writing unit is adjusted in the sub-scanning direction, while the laser beam is irradiated to form a latent image, to correct a color shift among the respective colors.

## FIG. 14

START IMAGE FORMATION

S201

READ COLOR SHIFT CORRECTION VALUES

S202

SEPARATE COLOR SHIFT CORRECTION VALUE AT LEADING END OF IMAGE INTO TIMING CONTROL CORRECTION VALUE AND BEAM IRRADIATED POSITION CORRECTION VALUE

S203

START WRITING BASED ON COLOR SHIFT CORRECTION VALUE

END IMAGE FORMING

**Description**

BACKGROUND OF THE INVENTION

1. Field of the Invention:

The present invention relates to a color shift correcting method for correcting a color shift which can occur when an image is formed in a plurality of colors. More specifically, the present invention relates to a color shift correcting method for reducing a color shift which can occur when a color image is formed by transferring a plurality of images sequentially formed in different colors by a multi-image forming apparatus comprising a plurality of image forming means such as a tandem type color copier and a color printer, or by at least one image forming means onto a transfer belt or a sheet on a transfer belt or onto an intermediate transfer drum. The present invention also relates to an optical writing device and an image forming apparatus for use with the color shift correcting method.

2. Description of the Related Art:

In recent years, the colorization has been rapidly introduced into documents processed in businesses, so that image forming apparatuses such as a copier, a printer, a facsimile, and the like which process these documents, have been rapidly modified to support the colorization. At present, these color document processing apparatuses tend to provide a higher image quality and a higher processing speed in line with requirements for a higher grade and a higher speed for business processing in offices and the like. To respond to such demands, a variety of so-called tandem type color image forming apparatuses, for example, have been proposed and commercially available. The tandem type color image forming apparatus has an image forming unit for each of black (K), yellow (Y), magenta (M) and cyan (C), and directly or indirectly transfers multiple images in different colors, formed by the respective image forming units, onto a conveyed transfer material or an intermediate transfer drum, to form a color image thereon.

Since the tandem type color image forming apparatus uses a plurality of image forming units to form a single full color image, it can form a full color image at an extremely high speed. However, the image formation at an increased speed can result in a failure in accurate registration of images formed by the respective image forming units, i.e., a failure in accurate color registration, so that it is quite difficult to reconcile a higher image quality and faster processing. This difficulty is caused by the position and size of each image forming unit which forms part of the color image forming apparatus, and by a subtle change in the position and size of parts in the image forming units. To address the problem of failed registration, Laid-open Japanese Patent Application No. 2000-3121 has previously proposed an apparatus for reducing a color shift. Specifically, the proposed apparatus forms a pattern for detecting a color shift on a transfer member or the like, detects the pattern using a sensor to measure the amount of the color shift, and adjusts an image write timing to reduce the color shift.

This apparatus relies on a correcting method which involves detecting a color shift which is constant in size and orientation (hereinafter called the "DC color shift") for correction. The color shift is caused by a subtle change in the position and size of each image forming unit itself as well as the position and size of parts in the image forming units, due to a temperature change within the color image forming apparatus, an external force applied to the color image forming apparatus, and the like.

However, if the foregoing apparatus employs a polygon mirror based optical deflector for a writing means for each color, the correction is generally made in units of scanning. Specifically, since a 600 dpi image is corrected approximately in units of 42 $\mu$m, an associated correction error must be included in a strict sense. To eliminate this correction error, each optical deflector must be adjusted by controlling the rotating phase thereof before it starts writing an image in its associated color. For adjusting the rotating phase of the optical deflector, the optical deflector must be temporarily accelerated or decelerated for adjusting the rotation thereof. However, since the optical deflector is rotating at a high speed, the phase adjustment takes a long time and entails technical difficulties, and therefore causes a prohibitively high cost in actuality. On the other hand, in an image forming apparatus which includes only one deflector to deflect laser beams of the respective colors with the intention of reducing the cost, respective color images are written at the same phase without exception, so that if a misregistration for each color is corrected only with the write timing, the misregistration during one scanning operation of the deflector cannot be corrected in theory.

The color shift also includes, other than the DC component, another color shift, the size and orientation of which vary on a periodic basis, mainly caused by rotating components such as a photosensitive drum, a belt drive roll, and the like. Laid-open Japanese Patent Application 2000-199988 describes that the AC color shift occurs due to aging changes (abrasion) in the thickness of a belt, a driving roller and the like when a transfer belt is used in an image forming apparatus.

To accommodate the AC color shift, a conventional color image forming apparatus detects fluctuations in the rotational speed of a photosensitive drum using an encoder attached to a rotating shaft of the photosensitive drum or the like, and feeds the fluctuations in the rotation of the photosensitive drum detected by the encoder forward or back to a driving motor to reduce the fluctuations in the rotation of the photosensitive drum.

However, even if the information sensed by the encoder is relied on to reduce fluctuations in the rotation of the photosensitive drum, the photosensitive drum itself includes eccentricities, or the surface of the photosensitive drum includes eccentricities caused by the installation of the photosensitive drum. Also, in a particular configuration, eccentricities may be caused by a clearance error of the rotating shaft of the photosensitive drum. These eccentricities may cause the AC color shift which in turn results in a degraded image quality.

Laid-open Japanese Patent Application No. 9-146329 proposes, for solving the foregoing problem, an image forming apparatus which permits the rotating phase of at least one rotating component such as a photosensitive drum, a belt drive roll and the like to be individually adjusted to prevent a degraded image quality caused by the AC color shift which can occur due to the aforementioned factors. This patent application proposes a method of eliminating the AC color shift by controlling the speed of the photosensitive drum, transfer belt or the like, however, this method requires a very precise control and accurate parts, and as a result, inevitably increases the cost.

In addition, even the foregoing method can merely eliminate a fractional amount of color shift caused by fluctuations in angular rotational speeds of the photosensitive drums when the angular rotational speed of each photosensitive drum fluctuates over the same amplitude. Actually, the angular rotational speed does not always fluctuate over the same amplitude, so that the color shift will not be satisfactorily eliminated in a strict sense. Further, since the respective photosensitive drums are driven by independent driving sources in order to match the rotating phases of the respective photosensitive drums, this also causes an increase in the cost.

Consider now the AC color shift when the belt has an uneven thickness. Assuming, for example, that the diameter of a driving roller is D (mm), the thickness of the belt is T (mm), and an image forming speed is V (mm/sec), the diameter of a belt neutral plane (diameter of pitch circle) is calculated by:

$$D+T \text{ (mm)}.$$

From the foregoing, the distance extending over all image forming units is calculated by:

$$N \times \pi \times (D+T) \text{ (mm)}$$

where N is an integer. Therefore, for reducing the apparatus to the smallest possible size, the distance extending over the image forming units is calculated by:

$$\pi \times (D+T) \text{ (mm)}$$

The amount of fluctuations in the image forming speed is calculated by:

$$(\Delta T)/(T+D) \times V \text{ (mm/sec)} \qquad (1)$$

where $\Delta T$ is a difference in the thickness of the belt.

Generally, since a full color image is formed by four image forming units, the distance between the image forming units at both extreme ends is calculated by:

$$3 \times \pi \times (D+T) \text{ (mm)}$$

At a normal image forming speed, a time required for a sheet to pass through the four image forming units is calculated by:

$$3 \times \pi \times (D+T)/V \text{ (seconds)} \qquad (2)$$

Therefore, the amount of misregistration on an image, which can occur if the roller is worn away, is found between the image forming units at both extreme ends, by multiplying the equation (1) by the equation (2):

$$3 \times \pi \times (\Delta T) \qquad (3)$$

Specifically, even if there is merely 10 µm of difference in the belt thickness, the amount of color shift mounts up to approximately 94 µm, as calculated from the equation (3). It is understood from this fact that a shift exceeding two pixels, when the resolution is 600 dpi, is repeated every cycle of the belt, resulting in the AC color shift.

While such an AC color shift may be eliminated by controlling the speed of the transfer belt as mentioned above, this requires a very precise control and accurate parts, and therefore inevitably increases the cost.

SUMMARY OF THE INVENTION

The present invention has been made in view of the actual circumstances of the prior art, and it is an object of the present invention to provide a color shift correcting method which is capable of accurately correcting a color shift in a sub-scanning direction, and an optical writing device for use with the color shift correcting method.

It is another object of the preset invention to provide a color shift correcting method which is capable of accurately correcting a color shift due to dynamic causes such as fluctuations in the speed of an image carrier and intermediate transfer element at a low cost without relying on driving motor rotation control means or encoder, and an optical writing device for use with the color shift correcting method.

It is a further object of the present invention to provide an image forming apparatus which is capable of forming a high grade image by accurately correcting a color shift.

To achieve the above objects, the present invention provides, in a first aspect, a color shift correcting method for correcting a color shift due to misregistration of images in different colors, when a color image is formed by developing latent images written onto associated image carriers by optical writing means, and directly or indirectly transferring the developed images in different colors onto a movable element. The method includes the step of adjusting a position on the image carrier irradiated with the optical beam emitted from the optical writing means in a sub-scanning direction to correct a color shift among the respective color images while the light beam is being irradiated from the optical writing means on the image carriers to form the latent images on the image carriers. According to this color shift correcting method, since a position at which the light beam is irradiated from the writing means is adjusted in the sub-scanning direction while a latent image is formed to correct a color shift among the respective colors, it is possible to eliminate a color shift which presents periodic fluctuations in its size and orientation.

Preferably, in the color shift correcting method, the step of adjusting a position on the image carrier irradiated with the optical beam in the sub-scanning direction includes reading a pattern written on the image carriers before starting the adjustment for detecting the color shift among the developed images, and adjusting the position based on the result of reading the pattern. According to this preferred implementation of the color shift correcting method, since the position at which the light beam is irradiated is adjusted in the sub-scanning direction based on the pattern which is actually written and developed on the image carrier, a highly accurate position adjustment can be accomplished.

Preferably, in the color shift correcting method, a timing at which the pattern is written is set based on a timing at which a reference point provided on the image carrier is detected. According to this preferred implementation of the color shift correcting method, it is possible to eliminate a color shift, which presents periodic fluctuations in its size and orientation, caused by fluctuations in the speed of the image carrier.

Preferably, in the color shift correcting method, a timing at which the pattern is written is set based on a timing at which a reference point provided on an intermediate transfer element is detected. According to this preferred implementation of the color shift correcting method, it is possible to eliminate a color shift, which presents periodic fluctuations in its size and orientation, caused by fluctuations in the speed of the intermediate transfer element.

Preferably, in the color shift correcting method, the step of adjusting a position on the image carrier irradiated with the optical beam in the sub-scanning direction includes the steps of correcting a timing at which the optical writing means writes the image, and correcting the position of the light beam, wherein the two steps are executed in parallel. According to this preferred implementation of the color shift correcting method, since the steps of correcting a timing at which the optical writing means writes the image, and correcting the position of the light beam are executed in parallel, a color shift can be rapidly corrected.

Preferably, in the color shift correcting method, the step of correcting the write timing includes correcting a portion corresponding to a quotient derived by dividing the amount of misregistration by a dot pit, and the step of correcting the beam position includes correcting a portion corresponding to a residual resulting from the division of the misregistration amount by the dot pitch. According to this preferred implementation of the color shift correcting method, a large amount of misregistration is corrected in the step of correcting the write timing, while a small amount of misregistration is corrected in the step of correcting the beam position. Since the large and small amounts of misregistration are corrected independently of each other, a color shift can be corrected with a high accuracy.

To achieve the above objects, the present invention provides, in a second aspect, an optical writing device having a plurality of optical writing means for irradiating image carriers with optical beams based on input image information for performing optical writing for forming images in a plurality of colors. The apparatus includes adjusting means for adjusting a position on each of the image carriers at which an optical beam emitted from the optical writing means is irradiated such that the light beam irradiated positions match with one another when the images in the respective colors are superimposed. According to this optical writing device, a position at which the light beam is irradiated from the writing means is adjusted in the sub-scanning direction while a latent image is formed to correct a color shift among the respective colors, such that light beam irradiated positions on the respective image carriers match one another when the respective color images are superimposed on one another, so that the optical writing device can eliminate a color shift which presents periodic fluctuations in its size and orientation.

Preferably, in the optical writing device, the optical writing means includes a laser light emitting element and a coupling optical system, and the adjusting means includes a holding member for integrally holding the laser light emitting element and the coupling optical system, and a driving mechanism for moving the holding member in the sub-scanning direction. According to this preferred implementation of the optical writing device, the light beam writing position can be displaced in the sub-scanning direction while the laser light emitting element and coupling optical system are held at relative positions by moving in the sub-scanning direction the holding member which integrally holds the laser light emitting element and coupling optical system, thereby making it possible to correct a color shift in a simple structure.

Preferably, the optical writing device further includes an optical housing for holding an optical deflector and other optics for irradiating the image carriers with light beams, wherein the holding member is supported in the optical housing for rotation about an axis such that the holding member is eccentric to an optical axis of the light beam. According to this preferred implementation of the optical writing device, an optical beam irradiated position can be displaced in a simple structure by rotating the holding member about the axis, thereby accomplishing a highly accurate color shift correction.

Preferably, in the optical writing device, the driving mechanism drives the holder means for rotation about the axis. According to this preferred implementation of the optical writing device, since a light beam irradiated position can be precisely displaced only by the driving mechanism which rotates the holding member, a color shift can be corrected with a high accuracy.

Preferably, in the optical writing device, the optical axis of the light beam is eccentric to the axis of rotation of the holding member such that the optical axis of the light beam matches the axis of rotation of the holding member at a light beam deflecting position of the optical deflector. According to this preferred implementation of the optical writing device, since the optical axis of the light beam is substantially matched with the axis of rotation of the holding member at a light beam deflecting position of the optical deflector, the optical characteristics will not vary even if the holding member is rotated. Also, since the light beam irradiated position on the image carrier will not largely move in the main scanning direction, no color shift will occur in the main scanning direction, thereby enabling the light beam to be written for providing a high quality image.

Preferably, in the optical writing device, the holding member includes guide members parallel with the sub-scanning direction of the image carriers in the optical housing for holding the optical deflector and the other optics for irradiating the image carriers with light beams, wherein the holding member is supported for movement along the guide members. According to this preferred implementation of the optical writing device, a light beam irradiated position can be displaced in a simple structure by moving the holding member along the guide members, thereby making it possible to correct a color shift with a high accuracy.

Preferably, in the optical writing device, the driving mechanism translates the holding member along the guide members. According to this preferred implementation of the optical writing device, a light beam irradiated position can be displaced in a simple structure only by the driving mechanism which translates the holding member, thereby making it possible to correct a color shift with a high accuracy.

Preferably, in the optical writing device, the guide members have a curvature which is set such that the optical axis of the light beam substantially matches a light beam deflecting position of the optical deflector when the light beam is moved. According to this preferred implementation of the optical writing device, since the curvature of the guide members is set such that the optical axis of the light beam substantially matches at a light beam deflecting position of the optical deflector when the light beam is moved, the optical characteristics will not vary even if the holding member is moved. Also, since the light beam irradiated position on the image carrier will not move in the main scanning direction, no color shift will occur in the main scanning direction, thereby enabling the light beam to be written for providing a high quality image.

To achieve the above objects, the present invention provides, in a third aspect, an image forming apparatus which includes at least one image forming means having an image carrier for forming images in different colors, a movable element for receiving the images in different colors formed by the image forming means directly or indirectly transferred thereto, and the aforementioned optical writing device. Since the image forming apparatus in the third aspect of the present invention can carry out optical writing without causing a color shift which presents periodically fluctuating size and orientation, a high quality image can be provided.

Preferably, the image forming apparatus further includes color shift amount detecting means for detecting the amount of color shift based on a plurality of patterns formed on the movable element, wherein the adjusting means makes an adjustment based on the amount of color shift detected by the color shift amount detecting means to correct a color shift. According to this preferred implementation of the image forming apparatus, since a light beam irradiated position is adjusted in the sub-scanning direction based on the developed pattern, it is possible to accurately adjust the light beam irradiated position and therefore provide a high quality image.

Preferably, the image forming apparatus further includes a reference position mark provided for detecting a rotating phase of the image carrier, detecting means for detecting the reference position mark, and processing means for detecting the amount of color shift on a color-by-color basis on the movable element based on a position at which the reference position mark is detected to calculate a color shift correction value corresponding to each of the colors, wherein the adjusting means adjusts a position on an image carrier corresponding to each color at which the light beam is irradiated based on the detected reference position mark and a plurality of calculated color shift correction amounts during formation of an image to correct the color shift. According to this preferred implementation of the image forming apparatus, since a position at which a light beam emitted from the writing means is irradiated is adjusted in the sub-scanning direction during the formation of a latent image for correcting a color shift caused by fluctuations in the rotational speed of the image carrier, it is possible to eliminate a color shift which presents periodically fluctuating size and orientation, caused by fluctuations in the rotational speed of the image carrier, to provide a high quality image.

Preferably, the image forming apparatus further includes a reference position mark provided for detecting a rotating phase on the movable element, detecting means for detecting the reference position mark, and processing means for detecting the amount of color shift on a color-by-color basis on the movable element based on a position at which the reference position mark is detected to calculate a color shift correction value corresponding to each of the colors, wherein the adjusting means adjusts a position on an image carrier corresponding to each color at which the light beam is irradiated based on the detected reference position mark and a plurality of calculated color shift correction amounts during formation of an image to correct the color shift. According to this preferred implementation of the image forming apparatus, the amount of color shift is precisely detected from the pattern image, the reference position mark on the image carrier is detected during the formation of an image, the image is formed from the same phase at which the color shift has been measured, and a light beam irradiated position on each image carrier is adjusted based on a calculated color shift correction value during the formation of a latent image, so that the color shift can be rapidly corrected with exactitude.

Preferably, in the image forming apparatus, the adjusting means includes a write timing control circuit for controlling a timing at which the light beam is irradiated onto each image carrier based on the reference position mark on the image carrier and the plurality of calculated color shift correction values, and a beam position control circuit for controlling a position at which the light beam is irradiated. According to this preferred implementation of the image forming apparatus, since the operation of the timing control circuit for controlling a timing at which the light beam is irradiated onto each image carrier based on the color shift correction values, and the operation of the beam position control circuit for controlling the light beam irradiated position are performed in parallel independently of each other, the image forming apparatus can carry out a rapid correction control.

Preferably, in the image forming apparatus, the write timing control circuit receives a quotient derived by dividing a misregistration amount by a dot pitch, and modulates a laser light emitting element based on the quotient, and the beam position control circuit receives a residual resulting from the division of the misregistration amount by the dot pitch, and moves the optical housing based on the residual. According to this preferred implementation of the image forming apparatus, since a large amount of misregistration corresponding to the quotient is corrected by the timing control, while a small amount of misregistration corresponding to the residual is corrected by the beam position control. Since the large and small amounts of misregistration are corrected by the different control circuits, a color shift can be corrected with a high accuracy.

Preferably, the image forming apparatus further includes a memory for storing the plurality of color shift correction values, and reading means for reading the plurality of color shift correction values stored in the memory. According to this preferred implementation of the image forming apparatus, since the color shift correction values can be read from the memory for correcting a color shift, the image forming apparatus can repeat the color shift correction.

The above and other objects, features and advantages of the present invention will become apparent from the following detailed description of embodiments, when read in conjunction with the accompanying drawings.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

Fig. 1 is a diagram generally illustrating the configuration of a color laser printer which embodies an image forming apparatus according to a first embodiment of the present invention;

Fig. 2 is a plan view of an optical writing (exposure) apparatus in Fig. 1;

Fig. 3 is a cross-sectional view generally illustrating the configuration of the optical writing (exposure) apparatus in Fig. 1;

Fig. 4 is a cross-sectional view generally illustrating the configuration of another exemplary optical writing (exposure) apparatus in Fig. 1;

Fig. 5A and 5B are diagrams showing exemplary configurations for displacing a laser beam irradiated position in the sub-scanning direction;

Fig. 6 is a diagram showing the relationship between a laser light source (LD) unit, a polygon mirror, an optical axis, and a central axis of rotation;

Fig. 7 is a front view of a beam irradiated position adjuster, when seen from one side of the LD unit to which the laser beam is emitted;

Fig. 8 is an explanatory diagram showing a beam irradiated position on a photosensitive surface when the beam irradiated position adjuster of Fig. 7 moves a position on the photosensitive surface at which the laser light is irradiated;

Fig. 9 is a diagram generally illustrating a driving mechanism for rotating a photosensitive drum and an intermediate transfer belt of an image generator block in the first embodiment;

Figs. 10A and 10B are diagrams illustrating an exemplary color shift detection pattern formed on the intermediate transfer belt;

Fig. 11 is a graph which shows the result of a measurement of an AC color shift made by a color shift sensor with the color shift detection pattern formed on the intermediate transfer belt;

Fig. 12 is a block diagram illustrating the configuration for controlling a misregistration correction in the first embodiment;

Fig. 13 is a flowchart illustrating a processing procedure for calculating a color shift correction value in the first embodiment;

Fig. 14 is a flowchart illustrating a processing procedure for correcting a color shift during the formation of an image in the first embodiment;

Fig. 15 is a diagram generally illustrating a driving mechanism for rotating the photosensitive drum and intermediate transfer belt of the image generator block in a second embodiment;

Fig. 16 is a graph which shows the result of a measurement of an AC color shift made by the color shift sensor with the color shift detection pattern which is formed on the intermediate transfer belt, showing the amount of shift on a cyan image with reference to a black image;

Fig. 17 is a block diagram illustrating the configuration for controlling a misregistration correction in the second embodiment;

Fig. 18 is a flowchart illustrating a processing procedure for calculating a color shift correction value in the second embodiment;

Fig. 19 is a flowchart illustrating a processing procedure for correcting a color shift during the formation of an image in the second embodiment of the present invention;

Fig. 20 is a diagram generally illustrating a driving mechanism for rotating the photosensitive drum and intermediate transfer belt of the image generator block in a third embodiment;

Fig. 21 is a graph which shows the result of a measurement of an AC color shift made by the color shift sensor with the color shift detection pattern which is formed on the intermediate transfer belt, showing the amount of shift on a cyan image with reference to a black image;

Fig. 22 is a block diagram illustrating the configuration for controlling a misregistration correction in the third embodiment;

Fig. 23 is a flowchart illustrating a processing procedure for calculating a color shift correction value in the third embodiment;

Fig. 24 is a flowchart illustrating a processing procedure for correcting a color shift during the formation of an image in the third embodiment of the present invention;

Fig. 25 is a front view of a beam irradiated position adjuster in a fourth embodiment;

Fig. 26 is an explanatory diagram showing a beam irradiated position on a photosensitive surface of a photosensitive drum when the beam irradiated position adjuster of Fig. 25 moves a position on the photosensitive surface at which the laser light is irradiated;

Fig. 27 is a side view illustrating a main portion of guide rails in Fig. 25;

Fig. 28 is a diagram showing an embodiment which varies the angle of a return mirror to change a position on the photosensitive drum at which a beam is irradiated;

Fig. 29 is a diagram illustrating an embodiment which varies the position of a prism to change a position on the photosensitive drum at which a beam is irradiated;

Fig. 30 is a diagram showing an embodiment which varies the angle of a glass plate to change a position on the photosensitive drum at which a beam is irradiated; and

Fig. 31 is a diagram illustrating an embodiment which drives an acoustic-optical element with high harmonics to change a position on the photosensitive drum at which a beam is irradiated.

DETAILED DESCRIPTION OF THE EMBODIMENTS

In the following, several embodiments of the present invention will be described with reference to the accompanying drawings. In the following embodiments, like parts are designated the same reference numerals, and repeated description is omitted if possible.

1. First Embodiment:

1.1 General Configuration of Image Forming Apparatus:

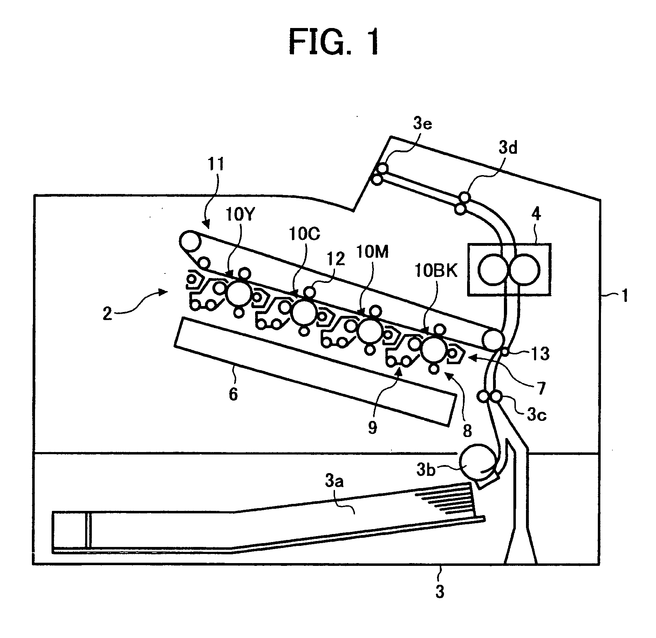

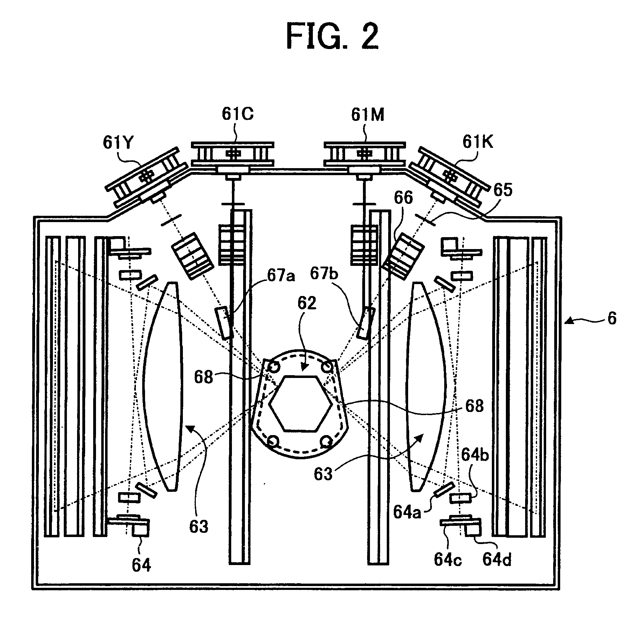

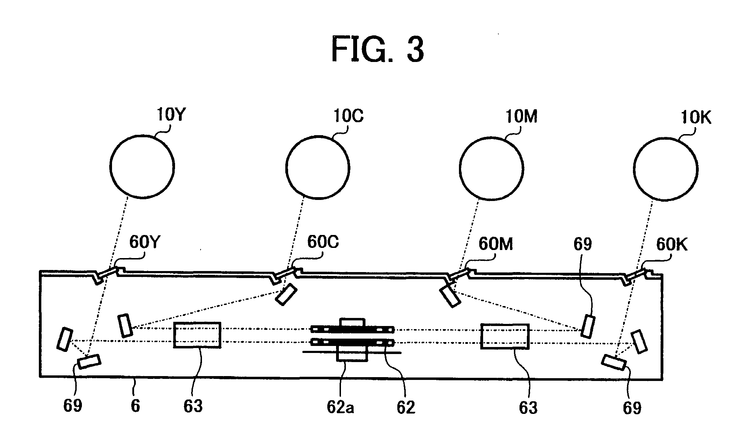

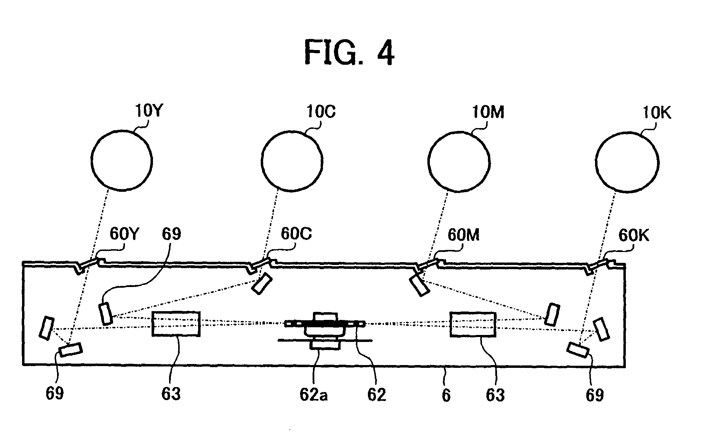

Fig. 1 generally illustrates the configuration of a color laser printer which embodies an image forming apparatus according to a first embodiment, Fig. 2 is a plan view of an optical writing (exposure) apparatus, and Figs. 3 and 4 are cross-sectional views generally illustrating the optical writing (exposure) apparatus.

Referring first to Fig. 1, the color laser printer 1, which embodies the image forming apparatus, employs a photoelectric image forming process and basically comprises an image generator block 2, a sheet feeder block 3 including a sheet feeder cassette, and a fixer block 4. The image generator block 2 includes a plurality of photosensitive drums 10, a plurality of exposure units 6, a plurality of transfer units 5, and the like. The photosensitive drums 10 are provided with charging units 8 (8Y, 8C, 8M, 8K), exposure units 6 (6Y, 6C, 6M, 6K), transfer units 5 (5Y, 5C, 5M, 5K), and cleaning units 7 (7Y, 7C, 7M, 7K), respectively. In the following description, these components are collectively designated only by the numerals, and Y, C, M, K are added to the numerals only when the components should be described with respect to the respective colors.

The charging unit 8 comprises a conductive roller which is applied with a charging bias voltage from a power supply unit to uniformly charge on a photosensitive layer on the surface of the photosensitive drum 10. The exposure unit 6 irradiates the surface of the photosensitive drum 10 with laser light (hereinafter called the "laser beam L" (LY, LC, LM, LK)), which turns on and off based on image data, to form an electrostatic latent image on the photosensitive drum 10. The developing unit 9 comprises a developing roller, a developer container, and the like for developing the electrostatic latent image on the photosensitive drum 10. Color image forming apparatuses often have four developing means for yellow Y, cyan C, magenta M, and black K, as is the case with the color laser printer herein described. In the first embodiment, the four image generator blocks associated with a yellow (Y) image, a cyan (C) image, a magenta (M) image and a black (K) image are arranged in order from the left of the drawing (from the upstream side of an intermediate transfer belt, later described, in its rotating direction). However, since a full color image can be formed even with three colors except for black K, i. e., yellow Y, cyan C and magenta M, an image forming apparatus may be designed without components associated with black K.

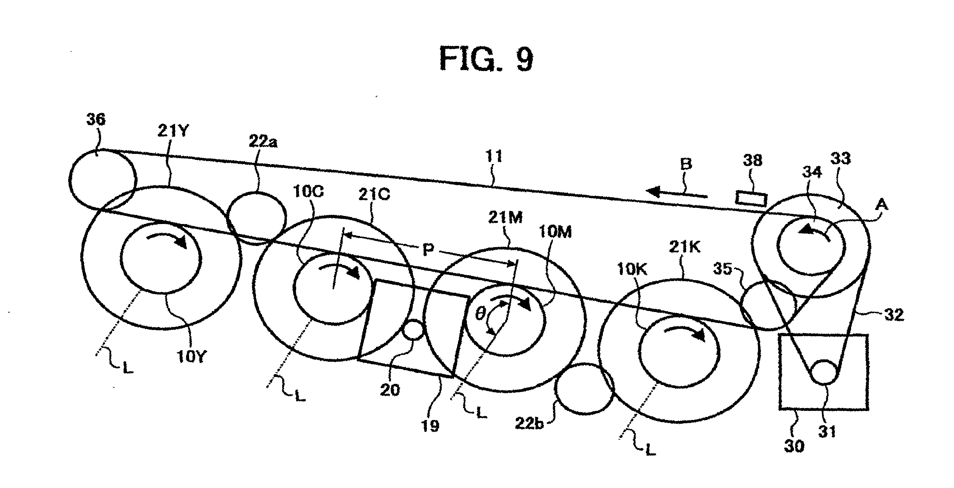

The transfer unit 5 transfers an image developed on the photosensitive drum 10 by a toner from the photosensitive drum 10 to an intermediate transfer belt 11 through a transfer roller 12. As illustrated in Fig. 9, later described, the intermediate transfer belt 11 is extended between a driving roller 34 and a driven roller 36 and a pressurizing roller 34. As the driving roller 34 rotates in a direction indicated by an arrow A in Fig. 9, the intermediate transfer belt 11 moves in a direction indicated by an arrow B in Fig. 9. A toner image formed on each photosensitive drum 10 comes in contact with the intermediate transfer belt 11, and transferred onto the intermediate transfer belt 11 by applying a predetermined bias voltage to the associated transfer roller 12 (12Y, 12C, 12M, 12K) disposed on the back of the intermediate transfer belt 11. The foregoing transfer is generally called the "primary transfer," and the transfer unit 5 is likewise called the "primary transfer unit." The cleaning unit 7 removes a developer remaining on the photosensitive drum 10 after the transfer before the next image creating operation is started.

The transfer methods implemented in the color image forming apparatus may be roughly classified into the following two: an intermediate transfer method which involves superimposing images formed by a plurality of photosensitive drums 10Y, 10C, 10M, 10K, respectively, on the intermediate transfer belt 11, and transferring the resulting image on a transfer material (this is called the "secondary transfer"), and a direct transfer method which involves directly transferring images formed on the photosensitive drums 10Y, 10C, 10M, 10K onto a transfer material such that they are superimposed on the transfer material. The color laser printer 1 illustrated in Fig. 1 employs the former method.

In the intermediate transfer method shown in the first embodiment, images superimposed on the intermediate transfer belt 11 are collectively transferred to a transfer material by a transfer roller 13 (called the "secondary transfer means"). The transfer material is often a recording material such as a sheet of paper (hereinafter also called the "transfer sheet"), and is stored in a sheet feeder cassette 3a of the sheet feeder block 3. Transfer sheets are separated and conveyed one by one by a pickup roller 3b. Each of the transfer sheets individually separated and fed out by the pickup roller 3b is conveyed to the transfer roller 13 which serves as the secondary transfer means by a pickup roller 3c. Then, the full color toner images superimposed on the intermediate transfer belt 11 are transferred to the transfer sheet. Subsequently, for fixing the resulting image, the transfer sheet is conveyed to the fixer 4 which applies the transfer sheet with heat and pressure to fix the image on the transfer sheet. The resulting transfer sheet with the image fixed thereon is discharged to the outside of the apparatus from a sheet discharge roller 3e through a conveyer roller 3d.

It should be noted that the recording sheet serves as the movable element in the direct transfer, while the intermediate transfer element (intermediate transfer belt 11) serves as the movable element in the indirect transfer.

### 1.2 Exposure Unit (Optical writing device):

Fig. 2 illustrates the internal configuration of the exposure unit 6 in detail. As can be seen in Fig. 2, the exposure unit 6 basically comprises a laser light source (unit) 61 for oscillating a laser beam L; a polygon mirror 62 which acts as a deflecting or scanning means for deflecting or scanning the laser beam L which is modulated based on an image signal; a focusing optical system 63 for focusing the scanned laser beam L on the photosensitive drum 10 in a desired size; and a synchronization sensing unit 64 for sensing a scan start timing for the laser beam L. The polygon mirror 62 is driven by a polygon motor 62a at high speeds. In the first embodiment, for irradiating the four photosensitive drums 10 associated with Y, C, M, K images with the laser beams L, four laser light sources 61Y, 61M, 61C, 61K are provided and divided into two groups, i.e., light sources 61Y, 61C and light sources 61M, 61K, such that laser beams are incident from both sides of the polygon mirror 62, as generally referred to as an "opposite scanning method."

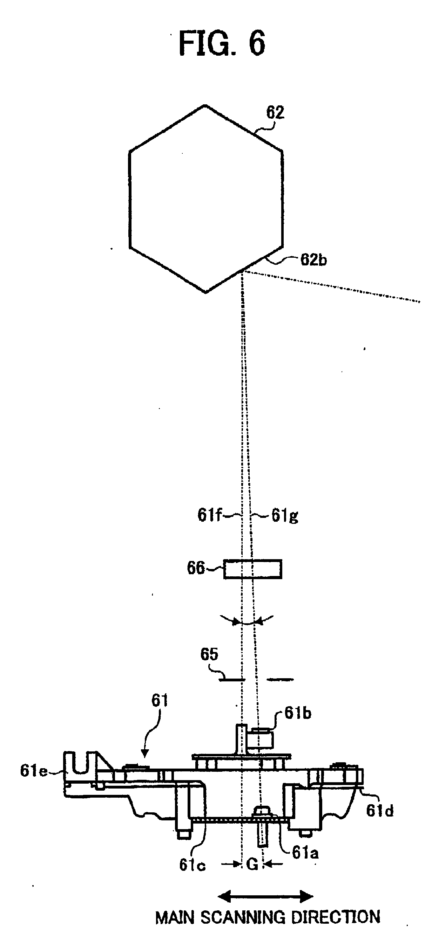

In the first embodiment, a semiconductor laser (LD) 61a is used for a light emission source. The laser light source unit (LD unit) 61 is comprised of the semiconductor laser 61a; a collimator lens 61b for substantially collimating divergent light emitted from the semiconductor laser 61a; a semiconductor laser driving circuit board 61c; and a holding member (base) 61d for holding these components. The laser beam L emitted from the LD unit 61 passes through an aperture 65 and a cylinder lens 66, and reaches the polygon mirror 62, as can be seen from Fig. 6 which generally shows a light path from the LD unit 61 to the polygon mirror 62. For independently impinging two sets of laser beams LY, LC and LM, LK onto the polygon mirror 62 from the respective sides, mirrors 67a, 67b are provided on one light path, as shown in Fig. 2.

When the polygon mirror 62 is rotated at a high rotational speed beyond 30,000 rpm, a sound-proof glass is often provided in front of the polygon mirror 62 for countermeasures to noise and the like. In Fig. 2, sound-proof glasses 68 are provided on both sides of the polygon mirror 62.

The laser beam L deflected or scanned by the polygon mirror 62 is incident on the focusing lens 63 again through the sound-proof glass 68. Subsequently, the laser beam L, which is guided to the photosensitive drum 10, passes through the mirror 69 and reaches the photosensitive drum 10. The angle at which the surface of the photosensitive drum 10 is irradiated with the laser beam L is set substantially the same for each of Y, C, M, K colors. On the other hand, for synchronization sensing for determining a timing at which a write is started, the laser beam L passing through the focusing lens 63 is returned back by the synchronization sensing mirror 64a so that it reaches the synchronization sensing unit 64. The synchronization sensing unit 64 comprises the focusing lens 64b, an electric circuit board 64c having an opto-electric transducer element, and a holding member 64 for holding these components.

Since the synchronization sensing essentially means that a timing is taken for the scanning light, the sensing unit is generally disposed prior to the scanning. In the first embodiment, however, a sensing means is disposed after the scanning for sensing fluctuations in the speed of scanning (or time). Fig. 2 illustrates the configuration for taking the synchronization before and after the scanning. In this example, the single synchronization sensing unit 64 senses upper and lower scanning light.

Figs. 3 and 4 show examples in which laser light is emitted from a single optical deflector to all the photosensitive drums 10Y, 10C, 10M, 10K. The difference between the two examples lies in that one or two polygon mirrors 62 are provided. Both have their respective advantages and disadvantages, so that either of them may be employed. In an alternative, though not shown, separate exposing means may be provided one by one for the plurality of photosensitive drums. For example, four exposing means may be provided for four photosensitive drums, respectively, to write the laser beams onto associated photosensitive drums. In Figs. 3 and 4, dustproof glasses 60Y, 60C, 60M, 60K are provided at respective exits from the exposing units 6 to the photosensitive drums 10 for preventing dust from introducing into the exposing means.

1.3 Beam Irradiated Position Adjusting Mechanism:

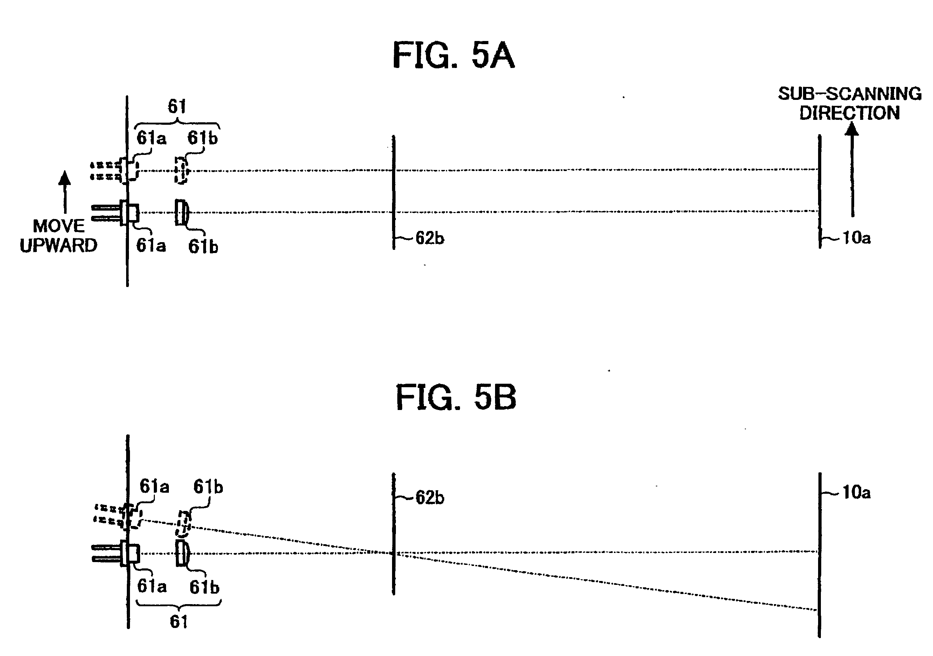

For displacing a laser beam irradiated position in the sub-scanning direction, the LD unit 61 is displaced in the sub-scanning direction to move the position at which the laser beam is irradiated on the photosensitive surface 10a of the photosensitive drum 10, as illustrated in Figs. 5A and 5B. Specifically, Fig. 5A shows an example in which the LD unit 61 is displaced in parallel (moved upward in the figure), while Fig. 5B shows an example in which the LD unit 61 is displaced in parallel, and the angle is also adjusted such that the irradiated position matches on the mirror surface 62b of the polygon mirror 62.

In an alternative, the return mirror 69 in the optical writing device is displaced to change the position at which the laser beam is irradiated on the photosensitive surface 10a. Actually, however, this method is not practical because a small change in angle causes a large displacement of the irradiated position, thus giving rise to a problem in terms of accuracy. In another alternative, a glass-like plate material may be inserted obliquely into the laser beam L in front of the polygon mirror 62 on which the laser beam L is incident. The angle of the glass-like plate material to the laser beam L may be changed to move the beam position in the sub-scanning direction. This technique, however, involves an increase in the number of parts, and can adversely affect the beam focusing performance depending on the accuracy of the surface of the glass-like plate material. Any technique is employed as long as it can precisely control the position of the laser beam L. Examples of these techniques will be described later.

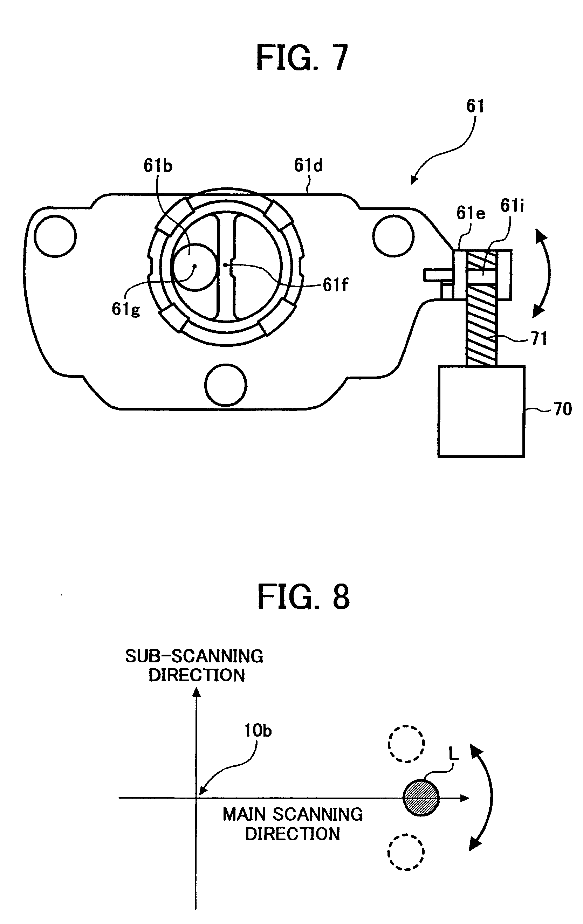

From the foregoing, the first embodiment employs a position adjuster for the holding member 61 which is configured as illustrated in Fig. 7. Fig. 7 is a front view of the position adjuster according to the first embodiment, wherein the LD unit 61 in Fig. 5 is viewed on the side from which the laser beam L exits. Specifically, the laser light source unit (LD unit) 61 comprises a semiconductor laser (LD) 61a which serves as a light source; a collimator lens 61b for substantially collimating divergent light emitted from the semiconductor laser 61a; a semiconductor laser driving circuit board 61c; and a holding member (base) 61d for holding these components. An arm 61e extends in a direction corresponding to the main scanning direction of the holding member 61d. Below the arm 61e, there are a beam position moving motor 70 which comprises a stepping motor; and a lead screw 71 driven by the beam position moving motor 70. The amount of advancement and retraction of the lead screw 71 is controlled by the rotating angle (the number of steps) of the beam position moving motor 70. The lead screw 71 is provided for concentric rotation integral with the rotating shaft of the beam position moving motor 70, and is engaged with a thread 61i formed on the arm 61e to convert the rotation of the lead screw 71 into the advancement and retraction (here, rotation) of the arm 61e.

As illustrated in Fig. 7, the holding member 61 is supported for rotation about the axis of rotation 61f near the collimator lens 61. The optical axis 61g of the laser beam L emitted from the collimator lens 61 is moved in accordance with the position of the arm 61e. Therefore, the position of the laser beam L defined by the optical axis 61g can be precisely moved on the photosensitive surface 10a in microns in accordance with the rotation of the beam position moving motor 70. Fig. 8 is an explanatory diagram showing the position of the laser beam L on the photosensitive surface 10a, wherein the rotation of the holding member 61d about the axis of rotation 61f causes the laser beam L to rotate about the center of rotation 10b on the photosensitive surface 10a, so that the laser beam L moves in the sub-scanning direction.

In Fig. 8, a hatched circle indicates the position (beam spot position) of the laser beam L emitted from the LD 61a on the photosensitive surface 10a which is located furthest away from the center of rotation 61f in the main scanning direction when the optical axis 61g of the laser beam L is displaced. Also, the laser beam L is irradiated at positions indicated by broken-line circles above and below the hatched circle after the optical axis 61g is displaced in the sub-scanning directions about the center of rotation 61f. The position of the LD 61a should match the hatched circle shown in Fig. 8, formed by the laser beam L emitted therefrom, when the beam irradiated position is not corrected at all.

Specifically, in the first embodiment, for precisely moving the position of the laser beam L in the sub-scanning direction in microns, the holding member 61 for holding the laser light emitting element (LD 61a) and a coupling optical system (collimator lens 63) is rotatably mounted in an optical housing which also accommodates other optical elements for irradiating the polygon mirror 62 and photosensitive drum 10 with the laser beam L. Also, there is a predetermined gap G between the axis of rotation 61f of the LD unit 61 and the optical axis 61g of the laser beam L mainly in the main scanning direction. Then, the axis of rotation 61f f the LD unit 61 is substantially matched with the optical axis 61g of the laser beam L at the position at which the laser beam L is deflected on the mirror surface 62b of the polygon mirror 62, and the LD unit 61 is rotated relative to an aperture 65 for shaping the laser beam L from the LD 61a secured in the optical housing. With this structure, even if the LD unit 61 is rotated, light flux passing the aperture 65 onward will not largely change, so that the position of the laser beam L can be controlled on the photosensitive surface 10a at a resolution of several μm.

Generally, the aperture 65 is often mounted in the LD unit 61 for shaping the light beam. If the LD unit 61 mounted with the aperture 65 is moved, the position of the laser beam L on the photosensitive surface 10a will largely move in the sub-scanning direction, so that this is not appropriate for controlling the position at a resolution of several μm. In other words, although the aperture 65 may be mounted in the LD unit 61 if the position of the laser beam L is largely moved for adjustment, the aperture 65 must be provided separately from the LD unit 61 if the position of the laser beam L must be controlled at a resolution of several μm, as is the case with this embodiment.

1.4 Mechanism for Driving Photosensitive Drum and Intermediate Transfer Belt:

Fig. 9 generally illustrates a driving mechanism for rotating the photosensitive drums 10Y, 10C, 10M, 10K and the intermediate transfer belt 11 in the image generator block 2 in Fig. 1. As described above, the intermediate transfer belt 11 is extended between the driving roller 34, driven roller 36, and pressure roller 35, and is driven by the belt driving motor 30. The belt driving motor 30 is attached to the driving shaft, and drives the belt driving roller 34 through a timing belt 33 extended between an integrally rotated motor pulley 31 and an integrally rotated driving pulley 33 disposed concentrically with the riving roller 34 to consequently rotate the intermediate transfer belt 11.

The photosensitive drums 10Y, 10C, 10M, 10K provided for the respective colors are in contact with the transfer surface (front surface) of the intermediate transfer belt 11, and are rotated by concentric coupling photosensitive drum gears 21Y, 21C, 21M, 21K associated with the respective photosensitive drums 10Y, 10C, 10M, 10K which are coupled to and driven by rotation coupling gears (idler gears) 22a, 22b disposed at two locations. A driving motor gear 20, which is concentrically attached to the rotating shaft of the drum driving motor 19 for integral rotation, comes into mesh with photosensitive drum gears 21C, 21M associated with the cyan photosensitive drum 10C and magenta photosensitive drum 10M. The driving force is transmitted, on one hand, to the photosensitive drum gear 21Y of the yellow photosensitive drum 10Y through the photosensitive drum gear 21C associated with the cyan photosensitive drum 10C and the rotation coupling gear 22a, and transmitted, on the other hand, to the photosensitive drum gear 21 associated with the black photosensitive drum 10K through the photosensitive drum gear 21M associated with he magenta photosensitive drum 10M and the rotation coupling gear 22b. Consequently, the single motor 19 can synchronously drive the four photosensitive drums 10Y, 10C, 10M, 10K in the same direction. The gears 21Y, 21C, 21M, 21K have the diameter and the number of teeth equal to those of the rotation coupling gears 22a, 22b, thereby driving the four photosensitive drums 10Y, 10C, 10M, 10K at the same peripheral speed.

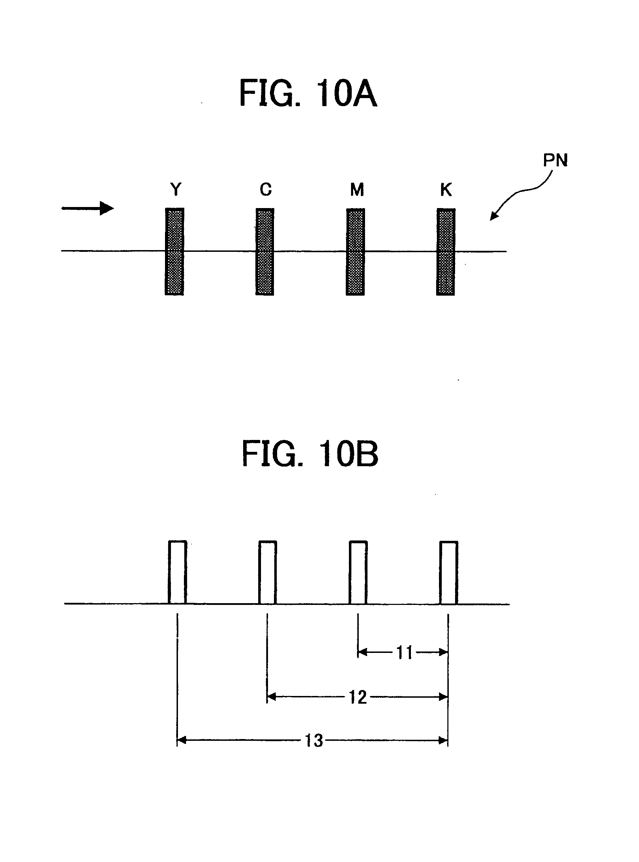

In the first embodiment, a color shift sensor 38 is provided at a location downstream of the belt driving roller 34 in the direction in which the intermediate transfer belt 11 is rotated, so that a color shift (misregistration) can be detected at this position. The color shift sensor 38 detects a color shift detection pattern (image) PN formed on the intermediate transfer belt 11 to detect a color shift. More specifically, for acquiring data which is based on for the color shift correction, a color shift detection pattern (image) PN as illustrated in Fig. 10A is marked on the intermediate transfer belt 11, and is detected by the color shift sensor 38 at a resolution of approximately 5 μm to acquire color shift data. The color shift detection pattern PN comprises an image of lines having a fixed length along the main scanning direction and spaced from each other by predetermined gaps in the sub-scanning direction, and is formed by the photosensitive drums 10Y, 10C, 10M, 10K associated with the respective colors. The predetermined gaps are respectively given by times t1, t2, t3, (see Fig. 10B) which are calculated when the photosensitive drums 10 and intermediate transfer belt 11 are driven at a set speed. Actually, the gaps vary due to fluctuations in speed, so that the amount of change is detected for comparison with a reference value to detect a color shift (misregistration). It should be noted that since the color shift occurs due to a shift of a write position, the terms "color shift" and "misregistration" are used in the same sense in the first embodiment unless otherwise noted.

The rotational speed of the photosensitive drum 10 may fluctuate due to uneven rotation of the driving motor 19, accumulated pitch errors and eccentricity of the driving motor gear 20, accumulated pitch errors and eccentricity of the photosensitive drum gear 21, accumulated pitch errors and eccentricities of the rotation coupling gears 22a, 22b, and the like. While the first embodiment is described in connection with the gears because the driving mechanism is implemented by a gear train, the same applies to a driving mechanism which is implemented by pulleys. In this way, the rotational speed of the photosensitive drum 10 may fluctuate due to the respective driving elements, resulting in an AC color shift which fluctuates on a periodic basis.

As described above, the driving force of the intermediate transfer belt 11 in the indirect transfer mode or the transfer conveyer belt in the direct transfer mode is transmitted through the timing belt 32 which is extended between the motor pulley 31 and roller driving pulley 33, in which case the AC color shift can also occur due to uneven rotation of the belt driving motor 30, eccentricity of the driving motor pulley 31, eccentricity of the roller driving pulley 33, eccentricity of the belt driving roller 33, uneven belt thickness, and the like.

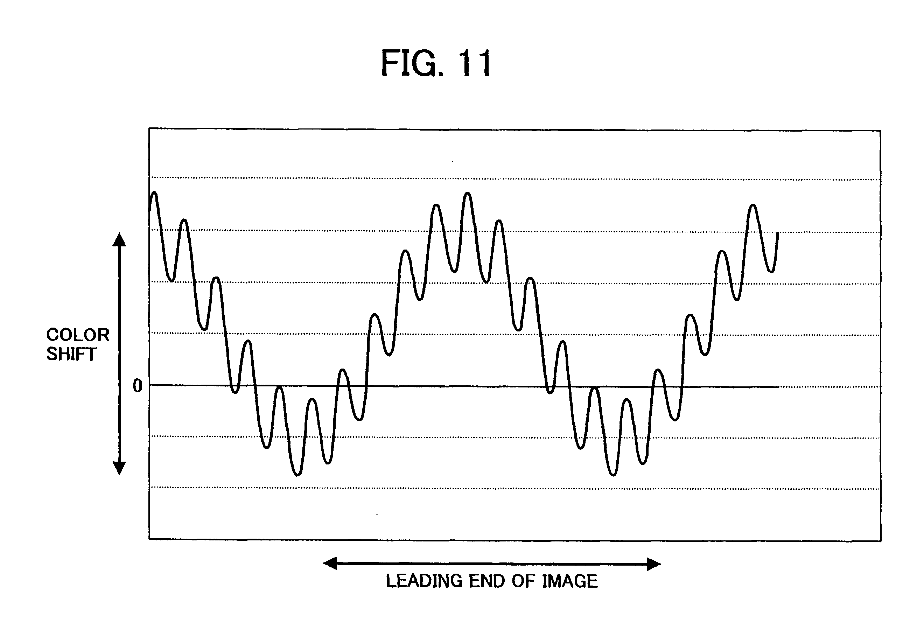

Fig. 11 is a graph which shows the result of a measurement of an AC color shift made by the color shift sensor 38 with the color shift detection pattern PN formed on the intermediate transfer belt 11. This graph shows the amount of shift of a cyan image C with reference to a black image K. As can be seen, actually, a color shift may occur due to fluctuations in the rotational speeds of the intermediate transfer belt 11 and photosensitive drums 10, and a DC color shift may overlap with the AC color shift. Here, a color shift of 20 μm in one direction corresponds to a DC color shift, and the AC color shift overlaps with this amount of DC color shift.

### 1.5 Misregistration Correction Control:

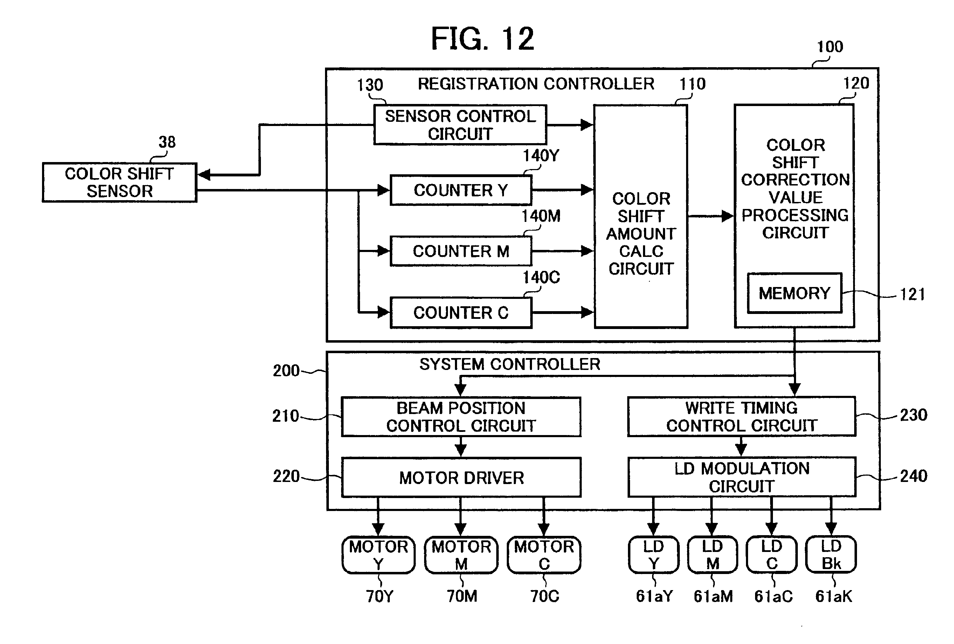

Fig. 12 is a block diagram illustrating the configuration for controlling a misregistration correction. A control circuit comprises a registration controller 100 and a system controller 200. The registration controller 100 comprises a color shift amount calculation circuit 110; a color shift correction value processing circuit 120; a sensor control circuit 130; and a Y-counter 140Y, an M-counter 140M, a C-counter 140C associated with the colors Y, M, C, respectively. The outputs of the sensor control circuit 130, Y-counter 140Y, M-counter 140M, and C-counter 140C are applied to the color shift amount calculation circuit 110. The sensor control circuit 130 controls the color shift sensor 38 which applies respective color detection outputs to the Y-counter 140Y, M-counter 140M, and C-counter 140C. The color shift correction value processing circuit 120 is also provided with a memory 121 for storing color shift correction values.

The system controller 200 comprises a beam position control circuit 210; a motor driver 220; a write timing control circuit 230; and an LD modulation circuit 240. The beam position control circuit 210 drives beam position moving motors 70Y, 70M, 70C for moving respective beam positions of Y-, M-, C-LD units 61 through the motor driver 220. The write timing control circuit 230 modulates LDs 61aY, 61aM, 61aC, 61aK for writing the respective colors through the LD modulation circuit 240.

### 1.5.1 Calculation of Color Shift Correction Values:

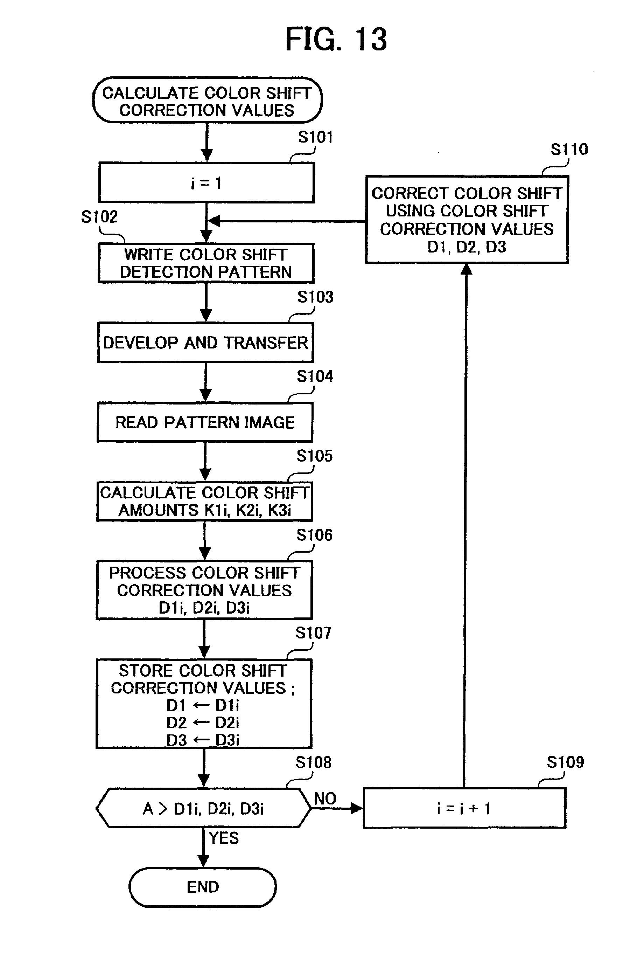

For correcting a color shift as shown in Fig. 12, color shift correction values are calculated and are relied on for the correction. For this purpose, the color shift detection pattern PN in Fig. 10 is written on each photosensitive drum 10, developed, and transferred onto the intermediate transfer belt 11. Then, the color shift sensor 38 measures the amount of color shift with reference to a preset color. In the first embodiment, K1i, K2i, K3i are calculated with reference to the black K. In the following, a routine for calculating a misregistration (color shift) correction value will be described with reference to a flow chart of Fig. 13.

In this routine, the first processing involves writing the color shift detection pattern PN on the respective photosensitive drums 10Y, 10C, 10M, 10K (steps, S101, S102) , developing the color shift detection pattern PN on each photosensitive drum and transferring the developed color shift detection pattern PN onto the intermediate transfer belt 11 (step S103). Then, the color shift sensor 38 reads the color shift detection pattern PN (step S104). In this event, as illustrated in Fig. 12, an interval between outputs of the color shift sensor 38 is counted by respective counters 140Y, 140M, 140C associated with the respective colors, and the color shift calculation circuit 110 calculates the times t1, t2, t3, shown in Fig. 10, and calculates the amounts of color shifts K1i, K2i, K3i from these times (step S105). Further, the correction value processing circuit 110 processes color shift correction values (the number of steps by which the beam position moving motor 70 is rotated for the associated LD unit 61) (step S106). The correction values except for that for the reference color are stored in the memory 121 (step S108). The correction values D1, D2, D3 are compared with a threshold value A (step S108). If larger than the threshold value A (No at step S108), the beam position is again adjusted based on the correction values D1, D2, D3, while a color shift pattern is again formed (step S109 S110 S102). Then, the color shift correction values D1i, D2i, D3i are calculated again (steps S103, S104, S105, S106), and are added to the previous correction values associated therewith in the following manner:

$$\text{Correction Value } D1 = D11 + D12 + \ldots$$

$$\text{Correction Value } D2 = D21 + D22 + \ldots$$

$$\text{Correction Value } D3 = D31 + D32 + \ldots$$

Eventually, when the value of each Dni (where n, i are positive integers) is equal to or less than the threshold value A (Yes at step S108), the routine for calculating the color shift correction values is terminated, followed by storage of the color shift correction values Dn in the memory 121 at step S107.

1.5.2 Correction of Color Shift during Formation of Image:

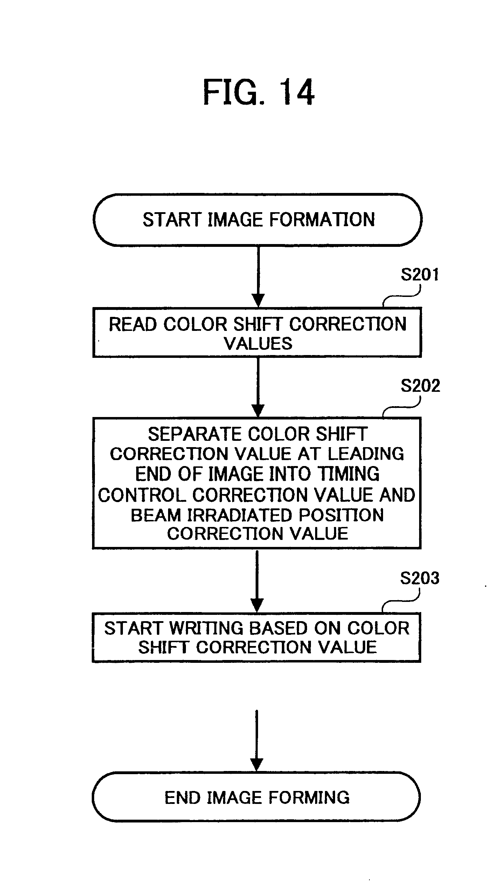

Fig. 14 is a flow chart illustrating a processing procedure for correcting a color shift during the formation of an image.

After calculating the color shift correction values Dn, the color shift correction values are used to correct a color shift to form an image. Specifically, upon start of the formation of an image, the measured color shift correction values Dn are read from the memory 121 (step S201). The color shift correction value Dn at the leading end of the image is separated into a timing control correction value and a beam position correction value (step S202). The color shift correction value Dn is separated into the timing control correction value and beam position correction value because they are separately processed by the beam position control circuit 210 and write timing control circuit 230, respectively, of the system controller 200, as can be seen from the block diagram of Fig. 12. The separation involves dividing the amount of color shift at the leading end of the image by a value corresponding to one line interval to provide a "quotient" and a "residual." The quotient is applied to the write timing control circuit 230, while the "residual" is applied to the beam position control circuit 210. Specifically, the "quotient" corresponds to the write timing correction, while the "residual" corresponds to the beam position correction. The reason for this separate correction strategy lies in that a long time is required to force the motor 70 to largely move the beam position, whereas a large amount of color shift can be instantaneously corrected when the timing is controlled.

After the color shift correction values are processed in the foregoing manner, the system controller 200 executes a beam position correction control and a write timing correction control. These correction controls cause a write to start at a corrected write position to form an image (step S203). Since the amount of color shift smoothly varies without any sudden change after the leading end of the image, the color shift is subsequently corrected by adjusting the beam position to form the image (step S203). In this way, the color shift correction value can be separated at the leading end of the image, and the image can be formed at the corrected write position from the detection of the reference position on the photosensitive drum 10, so that after that time, the color shift is corrected from the leading end of the image to carry out the formation of the image.

As illustrated in Fig. 12, in the beam position control, the beam position control circuit 210 outputs a signal corresponding to a displacement amount for a correction, based on the color shift amount correction value Dn, to the beam position moving motor 70 shown in Fig. 7 to rotate the motor 70. As the LD unit 61 is rotated about the center of rotation 61f, the optical axis 61g of the laser beam L is displaced as shown in Fig. 6, while the beam irradiated position is displaced on the photosensitive surface 10a as shown in Fig. 8. In the first embodiment, a stepping motor with 20 pulses per rotation was used for the beam position moving motor 70, and measurements were made for the rotating angle of the LD unit, and the beam irradiated position on the photosensitive surface 10. The result of the measurement shows that the beam position on the photosensitive surface 10a is displaced by 40 μm per rotation (about 2 μm per pulse), i.e., the beam position can be highly accurately controlled. Specifically, since the dot pitch is about 21 μm when the writing density is 1,200, the color shift can be corrected with the accuracy of one tenth of the dot pitch.

As illustrated in Fig. 8, in the first embodiment, the LD unit 61 is rotated to cause the position of the laser beam L to be displaced in the main scanning direction as well, however, the amount of displacement in the main scanning direction is sufficiently smaller than that in the sub-scanning direction. Also, since the writing is synchronized in the main scanning direction by the synchronization sensor 64, the displacement in the main scanning direction will not incur any problem.

1.5.3 Details on Registration Control:

Next, detailed description will be made on the registration of each color image performed in the color laser printer according to the first embodiment.

In the color laser printer 1, the image generator block 2 writes the color shift detection pattern PN for the respective colors on the Y-, C-, M-, K-photosensitive drums 10Y, 10C, 10M, 10K by the exposure unit 6, and forms the developed color shift detection patterns PN for the respective colors Y, C, M, K onto the intermediate transfer belt 11, as illustrated in Fig. 10. The color shift detection pattern Pn for each color is formed out of a region of the intermediate transfer belt 11 in which it conveys a transfer sheet. The respective color shift detection patterns PN are formed in a direction indicated by an arrow, in which the intermediate transfer belt 11 is conveyed, in the order of K, M, C, Y, with reference to the black K in respective times t1, t2, t3, resulting in the formation of a linear pattern which extends with these time intervals in a direction substantially orthogonal to the direction in which the intermediate transfer belt 11 is conveyed. Each color shift detection pattern PN is optically sensed by the color shift sensor 38 in sequence when it passes below the color shift sensor 38, associated with the movement of the intermediate transfer belt 11 in a direction indicated by an arrow, and is counted by the counter 140Y, 140M, or 140C on a color-by-color basis. The counted values are applied to the color shift amount calculation circuit 110 which compares the times t1, t2, t3, at which the associated color shift detection patterns PN are written, with the times at which they are detected, with reference to the black K, to calculate the amount of shift between the respective colors in the sub-scanning direction.

The counters 140Y, 140M, 140C are all reset by a K sensing signal to start counting. Then, the counter 140C, for example, stops counting in response to a C sensing signal. Likewise, the other counters 140M, 140Y stop counting in response to M and Y sensing signals, respectively. Since the subsequent circuits also operate in a similar manner for the colors Y, M, C, the following description will be made only on those associated with the color C as a representative. As described above, in the first embodiment, each color image is registered with reference to the position of the pattern PN for the black K, and the difference between set values TKC, KCsM is calculated by:

$$\Delta TC = KCM - KCsM$$

where M is the clock frequency of the counter (Hz), KC is an actual count value, and KCs is the set count value. The resulting $\Delta TC$ represents the amount of shift of the spacing between the K-color shift detection pattern and C-color shift detection pattern to the set spacing.

The polygon mirror 62 illustrated in Fig. 6 has, for example, six polygon surfaces 62b which provide reflective surfaces. Therefore, for rotating the polygon mirror at 20,000 rpm to form an image at a pixel density of 600 dpi with a single beam LD 61a, the line velocity of the photosensitive drum 10 should be set to 84.67 mm/s to form an image. If the image is written using two beams, the line velocity of the photosensitive drum 10 is increased to 169.33 mm/s. Here, if the amount of shift $\Delta TC$ of the spacing between the K- and C-color shift detection patterns PN to the set spacing is calculated to be 4.8 ms, a beam irradiated position adjusting value $\Delta X$ is calculated as follows:

$$\begin{aligned} \Delta X &= \Delta TC \times V1 \\ &= 4.8 \text{ ms} \times 84.67 \text{ mm/s} \\ &= 0.406 \text{ mm} \end{aligned}$$

Based on the calculated value, the beam position control circuit 210 drives the motor 70 for displacing the optical axis 61g of the laser beam to displace the position on the photosensitive drum 10 to which the laser beam is irradiated in the sub-scanning direction by 406 nm, thereby correcting the amount of shift. Similarly, for the M- and Y-color shift detection patterns PN, the amounts of shifts TM, TY are calculated, and the optical axis 61g of the laser beam is displaced in accordance with the calculated amounts of shifts to correct the amounts of shifts.

By thus controlling the beam position, the laser beam printer 1 can strictly correct the amount of misregistration even if the respective polygon mirrors 62 do not match in rotating phase. Though not shown, such a correction can be applied as well to a color image forming apparatus which employs a single LD unit and optical deflector to write images in respective colors, thereby providing for strict registration.

As described above, according to the first embodiment, the color shift detection patterns PN are written on the intermediate transfer belt before the formation of an image, the developed color shift detection patterns are read, and the beam position moving motor is rotated based on beam position correction data from the read color shift detection patterns PN during the formation of a latent image to correct a write position for a color image which is detected to have a color shift in the sub-scanning direction. Consequently, the misregistration can be corrected with a high accuracy.

## 2. Second Embodiment:

### 2.1 General Configuration and Control Scheme of Image Forming Apparatus:

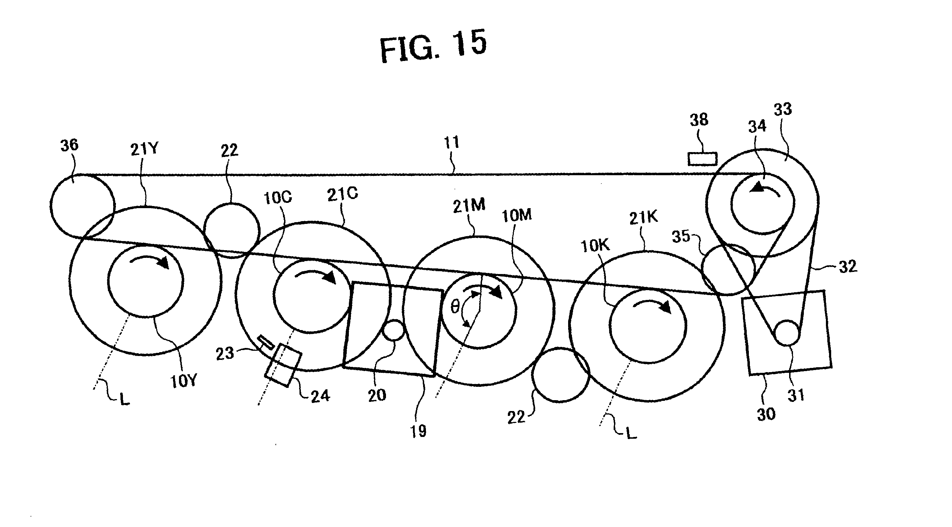

In a second embodiment, a photosensitive drum reference position mark 23 is attached on one of the photosensitive drums 10 in the first embodiment, as shown in Fig. 15, and a reference position sensor 24 is provided for detecting the photosensitive drum reference position mark 23 to correct a color shift. Thus, the second embodiment differs from the first embodiment in that the beam position is controlled based on the photosensitive drum reference position mark 23 and the output of the reference position sensor 24. Since the rest of the configuration in the second embodiment is equivalent to that of the first embodiment, like parts are designated the same reference numerals, and repeated description thereon is omitted.

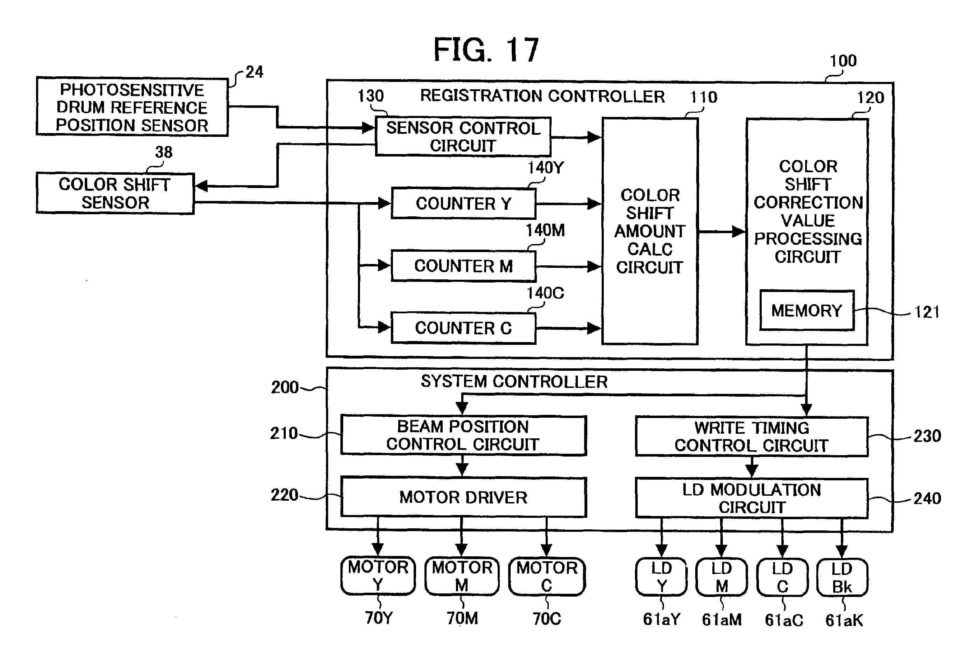

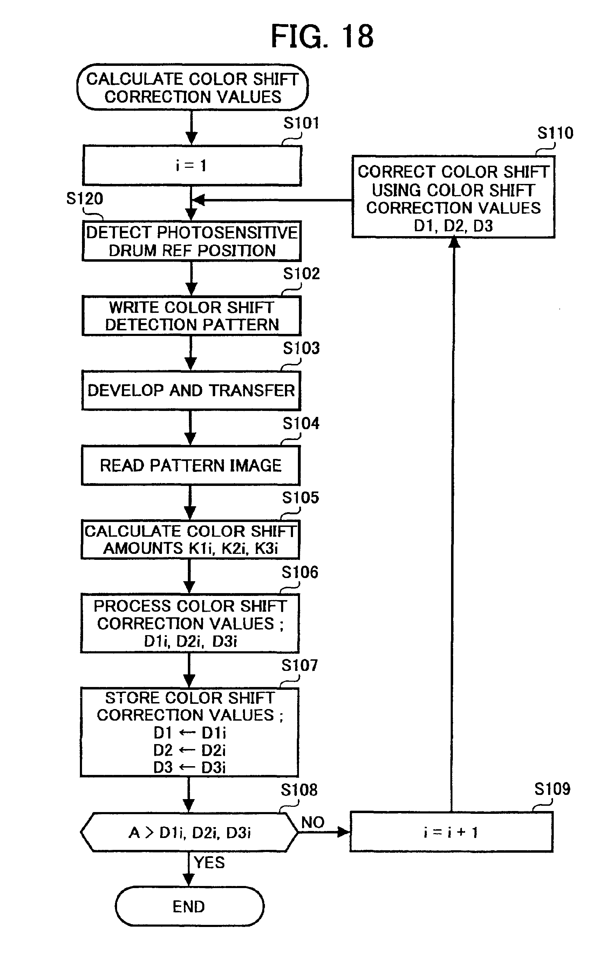

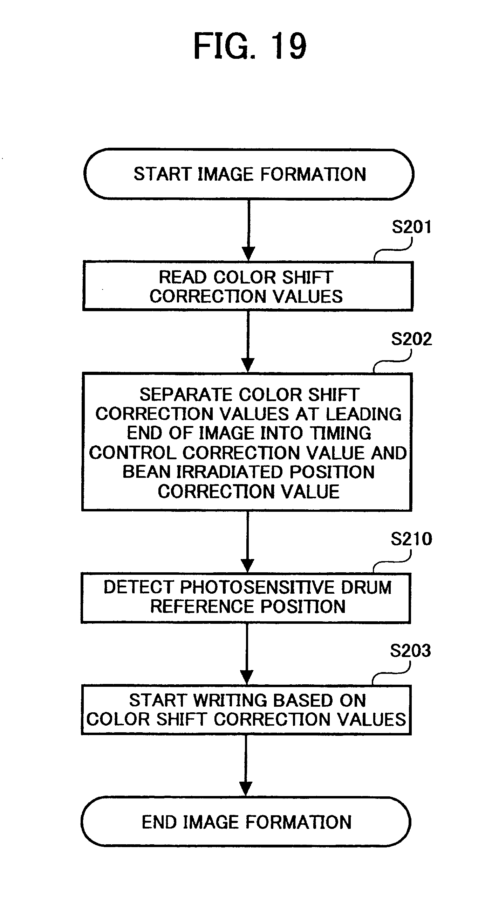

Fig. 15 generally illustrates the structure of a driving mechanism for rotating the photosensitive drums 10Y, 10C, 10M, 10K and the intermediate transfer belt 11 in the image generator block 2 according to the second embodiment. As can be seen from Fig. 15, the photosensitive drum reference position mark 23 is provided on the photosensitive drum gear 21C for driving the photosensitive drum 10C for cyan C, and the photosensitive drum reference position sensor 24 is provided in the housing of the image generator block 2, in the driving mechanism according to the first embodiment illustrated in Fig. 9. Also, as illustrated in a block diagram of Fig. 17 which depicts the configuration for controlling a misregistration correction, the photosensitive drum reference position sensor 24 is coupled to the registration controller 100. The photosensitive drum reference position sensor 24 is controlled by the sensor control circuit 130, and the output of the sensor 24 is applied to the control circuit 13 for conducting a control operation as illustrated in Figs. 18 and 19.

The block diagram illustrated in Fig. 17 additionally includes only the photosensitive drum reference position sensor 24 in the configuration for controlling a misregistration correction illustrated in Fig. 12 in the first embodiment, so that like parts are designated the same reference numerals, and repeated description thereon is omitted.

As illustrated in Fig. 15, when the respective photosensitive drums 10Y, 10C, 10M, 10K are coupled to the photosensitive drum gears 21Y, 21C, 21M, 21K, respectively, by the coupling gears 22a, 22b, the respective photosensitive gears 21Y, 21C, 21M, 21K will not shift in phase from an initial state in which the gears are assembled, so that the reference position mark 23 is provided on any predetermined one of the photosensitive drums 10Y, 10C, 10M, 10K or photosensitive drum gears 21Y, 21C, 21M, 21K, and the photosensitive drum reference position sensor 24 is provided for detecting the reference position mark 23, to detect the rotating phase of the drums. Alternatively, when the respective photosensitive drums 10Y, 10C, 10M, 10K are driven by independent motors instead of the configuration as illustrated in the second embodiment, the reference position marks 23 may be provided on the respective photosensitive drums 10Y, 10C, 10M, 10K or photosensitive drum gears 21Y, 21C, 21M, 21K, and associated reference position sensors 24 may be provided for detecting the rotating phases of the associated photosensitive drums to detect the rotating phases of the respective photosensitive drums.

As mentioned above, the rotational speed of the photosensitive drums can fluctuate due to uneven rotation of the driving motor 19; accumulated pitch errors and eccentricity of the driving motor gear 20; accumulated pitch errors and eccentricity of the photosensitive drum gear 21; accumulated pitch errors and eccentricities of the rotation coupling (idler) gears 22a, 22b; and the like. While the second embodiment is described in connection with the gear driving mechanism, the same applies to a driving mechanism which is implemented by pulleys. In this way, the rotational speed of the photosensitive drum 10 fluctuates due to the respective driving elements, resulting in an AC color shift which fluctuates on a periodic basis.

In view of the foregoing, in the second embodiment, the rotating angle θ from the exposure position to the transfer position, and the rotational speed of the driving elements are related in the following manner in order to reduce the AC color shift due to fluctuations in the rotational speed of the photosensitive drums 10:

(1) Transfer Position Interval: Integer Multiple of Distance from Exposure Position to Transfer Position;

(2) Rotating Angle θ from Exposure Position to Transfer Position; the motors rotate an integer number; and

(3) Rotating Angle θ from Exposure Position to Transfer Position; the idlers rotate an integer number.

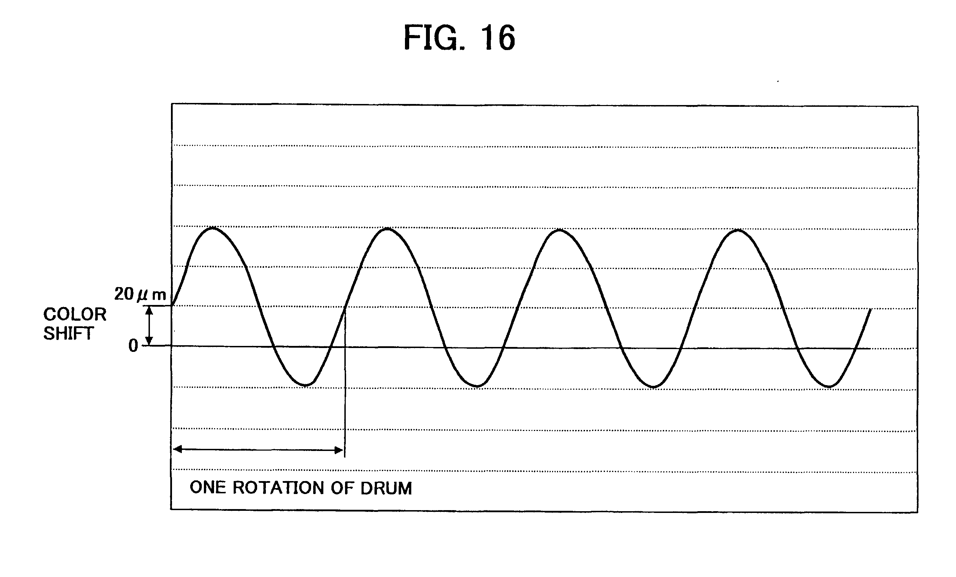

When the three conditions above are satisfied, the uneven rotation of the drum driving motor 19 and fluctuations in speed of the motor gear 20 and idler gears 22a, 22b will not lead to a color shift because these components are driven at the same period and synchronized with one another from the exposure to the transfer. However, the photosensitive drum gear 21 cannot be synchronized with the remaining components because of its period longer than the period from the exposure to the transfer, causing the AC color shift. While the AC color shift can be eliminated only by driving the photosensitive drum gears 21Y, 21C, 21M, 21K at the same phase and amplitude, it cannot be actually said that they are driven over the same amplitude. In effect, a AC color shift occurs as illustrated in Fig. 16.

Fig. 16 is a graph which shows the result of a

measurement of an AC color shift made by the color shift sensor 38 with the color shift detection pattern PN which is formed on the intermediate transfer belt 11 at the time the photosensitive drum reference position sensor 24 detects the photosensitive drum reference position mark 23. This graph shows the amount of shift of a cyan image C with reference to a black image K. In this way, a color shift occurs due to fluctuations in the period of one rotation of the photosensitive drum 10, and a DC color shift (20 μm in Fig. 16) may be superimposed on the AC color shift.

2.2 Calculation of Color Shift Correction Value:

Fig. 18 is a flow chart illustrating the processing procedure for calculating a color shift correction value according to the second embodiment.

The illustrated routine includes step S120 at which the photosensitive drum reference position is detected, between steps S101 and S102 in the flow chart of Fig. 13 in the first embodiment. At the time the photosensitive drum reference position sensor 24 detects the photosensitive drum reference position mark 23 (or with reference to this time), the color shift correction pattern PN is written (step S102), such that the color shift sensor 38 detects the color shift correction pattern PN to calculate a color shift correction value. Since the respective processing steps except for step S120 are identical to those in the first embodiment, repeated description thereon is omitted.

2.3 Correction of Color Shift during Formation of Image:

Fig. 19 is a flow chart illustrating a processing procedure for correcting a color shift in the second embodiment. This flow chart includes step S210 at which the photosensitive drum reference position is detected, between steps S202 and S203 in the flow chart of Fig. 14 in the first embodiment. The remaining processing steps are similar to those in the first embodiment. Specifically, after calculating the color shift correction value Dn as described above, this color shift correction value is used to correct a color shift, followed by the formation of an image. As described above, in the second embodiment, the photosensitive drum reference position sensor 24 detects the photosensitive drum reference position mark 23, and the color shift correction value is calculated at the time the photosensitive drum reference position mark is detected, in other words, with reference to the detected photosensitive drum reference position, so that the image is written with reference to the timing at which the photosensitive drum reference position is detected even when a color shift is corrected.

Specifically, upon start of the formation of an image, the measured color shift correction values Dn are read from the memory 121 (step S201), and the color shift correction value Dn at the leading end of the image is separated into a timing control correction value and a beam position correction value (step S202). Then, the sensor control circuit 130 detects a reference position of the photosensitive drum 10C based on the detection output of the photosensitive drum reference position sensor 24 (step S210), and image writing is started based on the color shift correction value found by the routine of Fig. 18, thus forming the image (step S203). Since the amount of color shift after the leading end of the image smoothly varies without any sudden change, the color shift is subsequently corrected by adjusting the beam position to form the image. In this way, since the color shift correction value at the leading end of the image can be separated into the timing control correction value and beam position correction value, and the image can be formed at a corrected image position from the time the reference position is detected on the photosensitive drum 10, so that the image is formed while the color shift is corrected from the leading end of the image after that time.

As described above, according to the second embodiment, a color shift can be corrected with a high accuracy because the reference position is detected on the photosensitive drum 10, and the color shift correction pattern PN formed based on the reference position of the photosensitive drum 10 is detected to correct the color shift at the time a latent image is written.

Otherwise, the respective components and processing, which are not particularly described, are similar in configuration and function to their counterparts in the first embodiment.

3. Third Embodiment:

3.1 General Configuration and Control Scheme of Image Forming Apparatus:

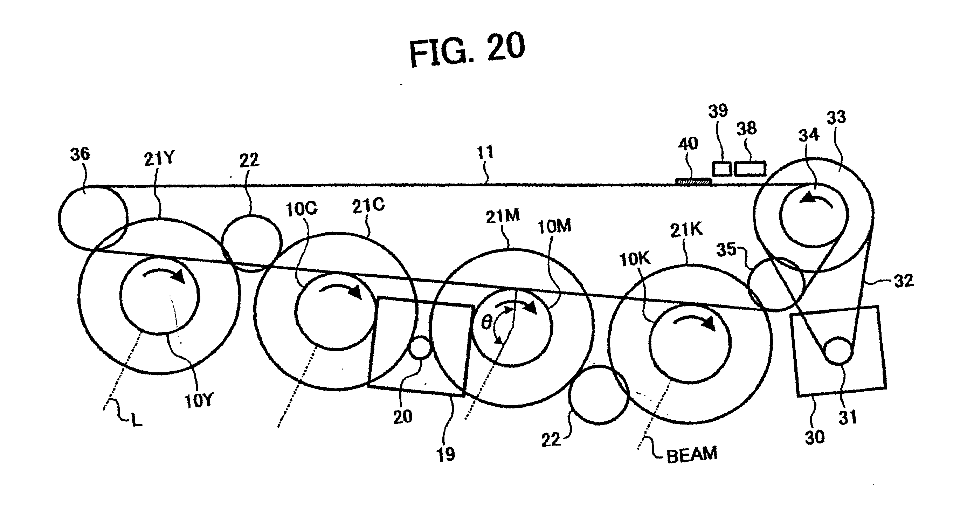

As illustrated in Fig. 20, in a third embodiment, a belt reference position mark 40 is provided on the intermediate transfer belt 11, and a belt reference position sensor 39 is provided for detecting the belt reference position mark 40 to correct a color shift. Except for the control based on the belt reference positron mark 40 and the output of the belt reference position sensor 39, the third embodiment is similar to the first embodiment in the remaining configuration, so that like parts are designated the same reference numerals, and repeated description thereon is omitted.

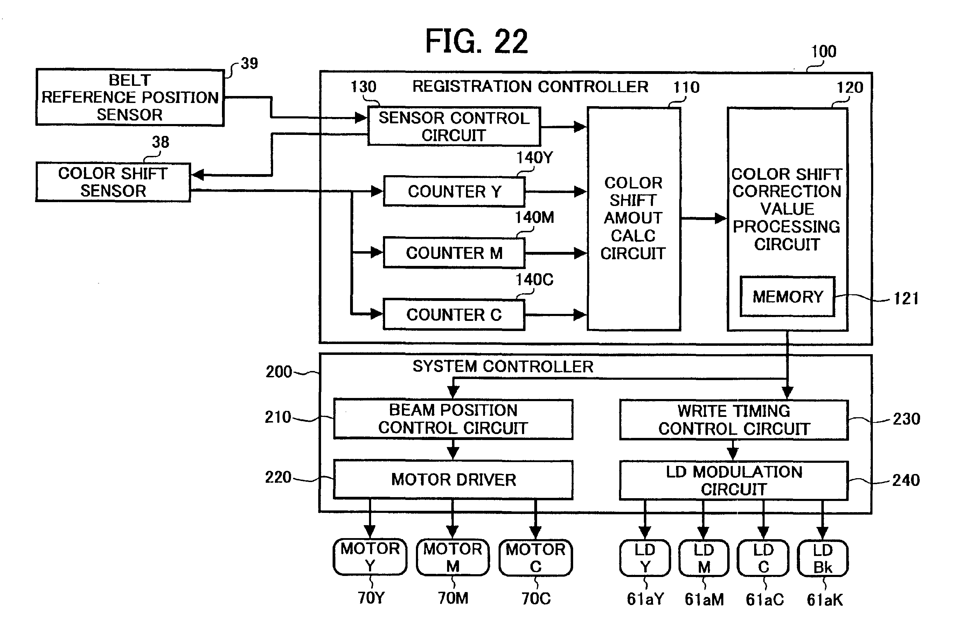

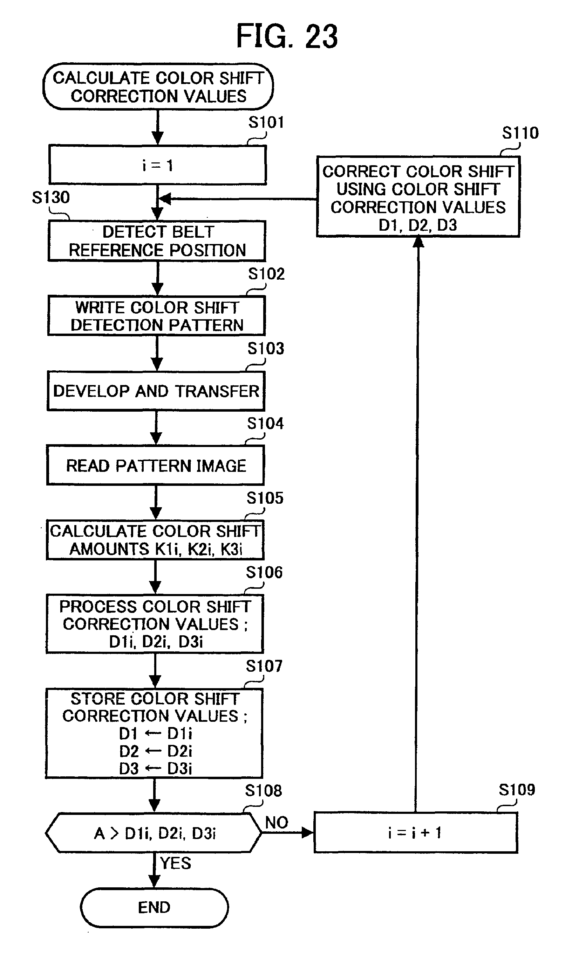

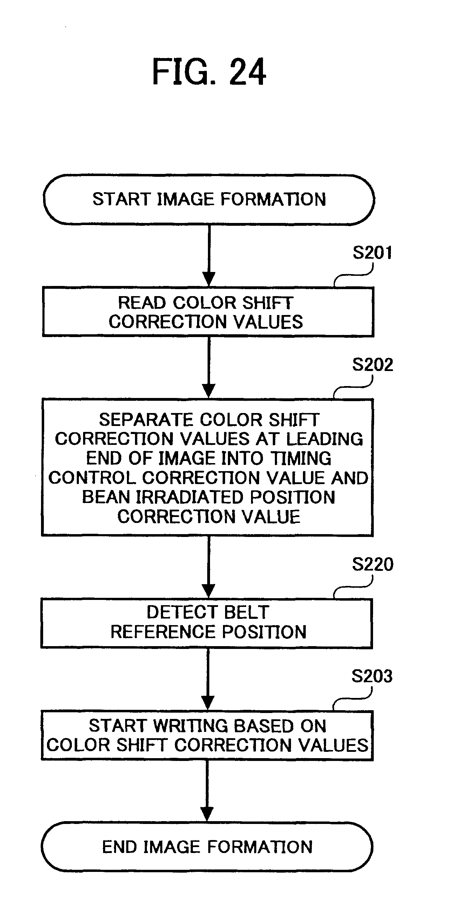

Fig. 20 generally illustrates the structure of a driving mechanism for rotating the photosensitive drums 10Y, 10C, 10M, 10K and intermediate transfer belt 11 in the image generator block 2 according to the third embodiment. As can be seen from Fig. 20, in addition to the driving mechanism illustrated in Fig. 9 in the first embodiment, the belt reference position mark 40 is provided on the intermediate transfer belt 11, and the belt reference position sensor 39 is provided in the housing of the image generator block 2. Also, as illustrated in a block diagram of Fig. 22 which depicts the configuration for controlling a misregistration correction, the belt reference position sensor 39 is connected to the registration controller 100. The belt reference position sensor 39 is controlled by the sensor control circuit 130, and the output of the belt reference position sensor 39 is applied to the sensor control circuit 130 for conducting the control as illustrated in Figs. 23 and 24.

The block diagram illustrated in Fig. 20 additionally includes only the belt reference position sensor 39 in the configuration for controlling a misregistration correction illustrated in Fig. 12 in the first embodiment, so that like parts are designated the same reference numerals, and repeated description thereon will be omitted.

As described above, in the relationship between the rotating angle θ from the exposure position to the transfer position, and the rotational speed of the driving elements, the following conditions are set in order to reduce the AC color shift due to fluctuations in the rotational speed of the photosensitive drums 10:

(1) Transfer Position Interval: Integer Multiple of Distance from Exposure Position to Transfer Position;

(2) Rotating Angle θ from Exposure Position to Transfer Position; the motors rotate an integer number; and

(3) Rotating Angle θ from Exposure Position to Transfer Position; the idlers rotate an integer number.

When the three conditions above are satisfied, the uneven rotation of the drum driving motor 19 and fluctuations in speed of the motor gear 20 and idler gears 22a, 22b will not lead to a color shift because these components are driven at the same period and synchronized with one another from the exposure to the transfer. However, the photosensitive drum gear 21 cannot be synchronized with the remaining components because of its period longer than the period from the exposure to the transfer, causing the AC color shift. However, the AC color shift can be eliminated if the photosensitive drum gears 21Y, 21C, 21M, 21K are composed of the same parts and driven at the same phase and amplitude.

On the other hand, the intermediate transfer belt 11 is driven by a driving force of the belt driving motor which is transmitted through the timing belt 32 wrapped around the motor pulley 31 on the driving shaft of the belt driving motor 30 and the driving pulley 33 on the shaft of the belt driving roller 34. As mentioned above, the belt reference position mark 40 is provided on the intermediate transfer belt 11 for determining the rotating phase of the intermediate transfer belt 11. The belt reference position sensor 39 provided in the housing detects the rotating phase of the intermediate transfer belt 11. Here, the rotational speed of the intermediate transfer belt 11 can fluctuate due to uneven rotation of the belt driving motor 30; eccentricity of the motor pulley 31; eccentricity of the pulley 33 of the belt driving roller 34; eccentricity of the driving roller 34; uneven belt thickness; and the like. In the third embodiment, each image formation station pitch L and each driving element are related in the following manner to prevent a color shift:

(4) Each Image Formation Station Pitch P = Perimeter of Belt Driving Roller Multiplied by Integer; and

(5) Each Image Formation Station Pitch P = Rotational Speed of Belt Driving Motor Multiplied by Integer.

When the above conditions are satisfied, the uneven rotation of the belt driving motor 30 in one rotation and fluctuations in speed of the respective pulleys 31, 33 and belt driving roller 34 will not lead to a color shift because these components are driven at the same period and synchronized with one another between the respective image formation stations. It should be noted that the image formation station pitch P is shown in Fig. 9.

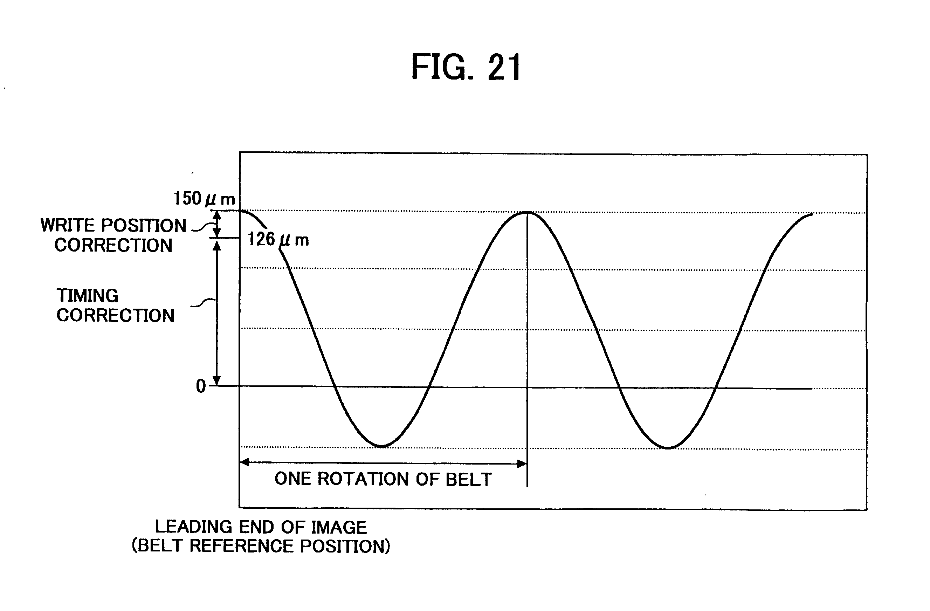

Fig. 21 is a graph which shows the result of a measurement of an AC color shift made by the color shift sensor 38 with the color shift detection pattern which is formed at the time the belt reference position sensor 39 detects the belt reference position mark 40 on the intermediate transfer belt 11. In the third embodiment, this graph shows the amount of shift of a cyan image C with reference to a black image K. It can be seen in the graph that a color shift occurs due to fluctuations in the period of one rotation of the intermediate transfer belt 11. A DC color shift may sometimes be superimposed on the AC color shift.

3.2 AC Color Shift due to Uneven Belt Thickness:

A so-called belt element such as a transfer material conveying belt, an intermediate transfer belt and the like has been conventionally made of a sheet material which is joined end to end to form an endless form. However, since no image can be formed at the joint of the belt, a so-called seamless belt element has been increasingly employed from a view point of an improved productivity of image formation. For example, a belt element manufactured by a so-called centrifugal molding method which involves casting and sintering a raw material solution in a rotary mold is susceptible to an uneven thickness in the circumferential direction of the belt element due to limitations inherent in the manufacturing method. This uneven thickness does not repeat increases and decreases in thickness, but often appears in a sinusoidal wave in one turn in the circumferential direction.

When a belt having such an uneven thickness is employed in a transfer belt of a tandem type image forming apparatus, the distance extending over the image forming units is calculated by Nxπx(D+T), where D is the diameter (mm) of a driving roller for driving the belt; T is the thickness of the belt (mm); D+T is the diameter of the neutral surface of the belt (diameter of a pitch circle) (mm), and N is an integer. Therefore, for reducing the apparatus to the smallest possible size, the distance extending over image forming units is calculated by:

$$\pi \text{ x (D+T) (mm)}$$

The amount of fluctuations in the image forming speed is calculated by:

$$(\Delta T)/(T+D) \text{ x V (mm/sec)} \qquad (1)$$

where $\Delta T$ is a difference in the thickness of the belt.

Generally, a full color image is formed by four image forming units, the distance between the image forming units at the extreme ends is calculated by 3 x π x (D+T) (mm). At a normal image forming speed, a time required for a sheet to pass through the four image forming units is calculated by:

$$3 \text{ x } \pi \text{ x (D+T)/V (seconds)} \qquad (2)$$

Therefore, the amount of misregistration on an image, which can occur if the roller is worn away, is found between the extreme image forming units, by multiplying the equation (1) by the equation (2):

$$3 \text{ x } \pi \text{ x } (\Delta T) \qquad (3)$$

Specifically, even if there is 10 μm of difference in the belt thickness, the amount of color shift mounts up to approximately 94 μm, as calculated from the equation (3). It is understood from this fact that a shift exceeding two pixels, when the resolution is 600 dpi, is repeated every cycle of the belt, resulting in the AC color shift (see Fig. 21).

3.3 Calculation of Color Shift Correction Value:

Fig. 23 is a flow chart illustrating a processing procedure for calculating a color shift correction value according to the third embodiment. This flow chart includes step S130 at which the belt reference position is detected, between steps S101 and S102 in the flow chart of Fig. 13 in the first embodiment. Specifically, at step S130, at the time the belt reference position sensor 39 detects the belt reference position mark 40 (or with reference to this time), the color shift correction pattern PN is written (step S102). The color shift sensor 38 detects this color shift correction pattern PN to calculate a color shift correction value. Since the processing steps in Fig. 23 except for step S130 is identical to those in the first embodiment, repeated description thereon is omitted.

3.4 Correction of Color Shift during Formation of Image:

Fig. 24 is a flow chart illustrating a processing procedure for correcting a color shift in the third embodiment. This flow chart includes step S220 at which the belt reference position is detected, between steps S202 and S203 in the flow chart of Fig. 14 in the first embodiment. The remaining processing steps are similar to those in the first embodiment. Specifically, after calculating the color shift correction value Dn as described above, this color shift correction value is used to correct a color shift, followed by the formation of an image. As described above, in the third embodiment, the belt reference position sensor 39 detects the belt reference position mark 40, and the color shift correction value is calculated at the time the belt reference position mark is detected, in other words, with reference to the detected belt reference position, so that the image is written with reference to the timing at which the belt reference position is detected even when a color shift is corrected.

Specifically, upon start of the formation of an image, the measured color shift correction value Dn is read from the memory 121 (step S201), and the color shift correction value Dn at the leading end of the image is separated into a timing control correction value and a beam position correction value (step S202). Then, the sensor control circuit 130 detects a reference position of the intermediate transfer belt 11 based on the detection output of the belt reference position sensor 39 (step S220), and image writing is started based on the color shift correction value found by the routine of Fig. 23, thus forming the image (step S203). Since the amount of color shift after the leading end of the image smoothly varies without any sudden change, the color shift is subsequently corrected by adjusting the beam position to form the image. In this way, since the color shift correction value at the leading end of the image can be separated into the timing control correction value and beam position correction value, and the image can be formed at a corrected image position from the time the reference position is detected on the photosensitive drum 10, so that the image is formed while the color shift is corrected from the leading end of the image after that time.

As described above, the separation at step 202 involves dividing the amount of color shift at the leading end of the image by a value corresponding to one line interval to provide a "quotient" and a "residual." The quotient is applied to the write timing control circuit 230, while the "residual" is applied to the beam position control circuit 210. Specifically, the "quotient" corresponds to the write timing correction, while the "residual" corresponds to the beam position correction. To give a specific example, when the color shift correction value Dn is separated in the example shown in Fig. 21, the dot pitch is approximately 42 µm when the resolution (writing density) is 600 dpi, so that 150 µm is divided by the dot pitch of 42 µm:

150 µm/42 µm = 3 with residual of 24.

Thus, 126 µm corresponding to three dots are processed by the timing control circuit 230, while the residual of 24 µm is processed by the beam position control circuit 21, wherein the former modulates the LD 61b, and the latter drives the beam position moving motor 70 to correct a color shift. 24 µm converts to 12 steps of the beam position moving motor. By thus conducting the timing control and beam position control in parallel, the writing position can be rapidly corrected with a high accuracy.

As described above, according to the third embodiment, a color shift can be corrected with a high accuracy because the reference position is detected on the intermediate transfer belt 11, and the color shift correction pattern PN formed based on the reference position of the intermediate transfer belt 11 is detected to correct the color shift at the time a latent image is written.

Otherwise, the respective components and processing, which are not particularly described, are similar in configuration and function to their counterparts in the first embodiment.

4. Fourth Embodiment:

In a fourth embodiment, the beam irradiated position adjusting mechanism in the first to third embodiments is replaced from a rotary mechanism to a translational mechanism. The remaining components are similar in configuration to their counterparts in the first to third embodiments, so that repeated description thereon is omitted.

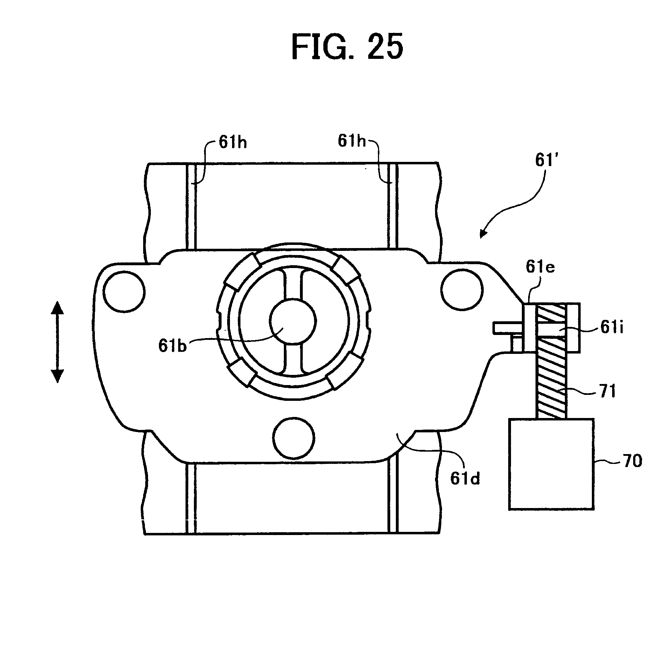

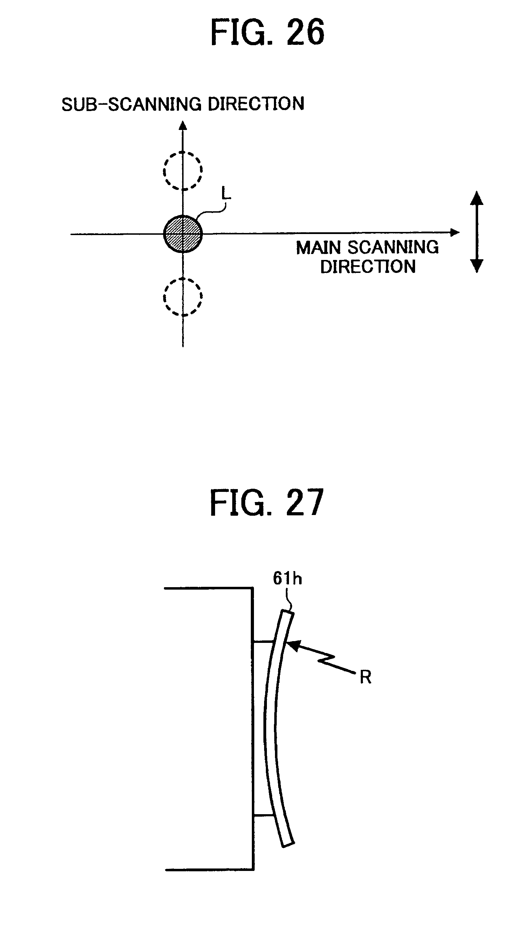

Figs. 25 to 27 are diagrams for describing the fourth embodiment. Specifically, Fig. 25 is a front view illustrating a main portion of an LD unit as well as a supporting mechanism and a moving mechanism associated therewith; Fig. 26 shows a position on a photosensitive surface which is irradiated with a laser beam; and Fig. 27 is a side view of a pair of guide rails which form part of the supporting mechanism. As illustrated in Fig. 25, the LD unit 61' according to the fourth embodiment comprises a pair of parallel guide rails 61h extending in the sub-scanning direction (vertical direction in Fig. 25), instead of along the axis of rotation 61f shown in Fig. 7, for supporting the holding member 61d for movement in the sub-scanning direction. In this structure, the arm 61e is also driven by the beam position moving motor 7. The LD unit 61' translates in the sub-scanning direction along the guide rails 61h in response to the rotation of the beam position moving motor 70. In the fourth embodiment, the LD unit 61' translates in a similar manner such that an irradiated position matches on the mirror surface 62b of the polygon mirror 62, as shown in Fig. 5B described above. For this reason, the parallel rails 61h are formed with a curvature R as illustrated in Fig. 27 such that the parallel rails 61h move along an arc about the matching point on the mirror surface 62b.

Also, while the lead screw 71 is engaged with the female thread 61i formed in the arm 61e, and driven by the beam position moving motor 70 also in the fourth embodiment, the arm 61e may be removed, in which case a central portion of the holding member 61d (between the parallel rails 61h) is driven. In other words, as long as the posture of the holding member 61d is restricted by the parallel rails 61h, the translation is possible irrespective of the position at which the lead screw 71 is engaged or meshed.

Otherwise, the respective components and processing, which are not particularly described, are similar in configuration and function to their counterparts in the first to third embodiments.

While the first to fourth embodiments have illustrated tandem type color printers (including copiers), the present invention can be applied as well to a monochrome (black and white) image forming apparatus for reducing a scaling error deviation in the sub-scanning direction.

5. Other Embodiments:

As previously mentioned, other methods of correcting a color shift may include, for example, a method of displacing the return mirror 69 in the optical writing device to displace a beam irradiated position, a method of changing the angle or moving the position by optics such as a glass plate, a prism or the like inserted at a location upstream of the polygon mirror 62 on which the laser beam L is incident, and the like. In addition, the beam may be deflected by an acousto-optical element, an opto-electric element, or a liquid crystal.

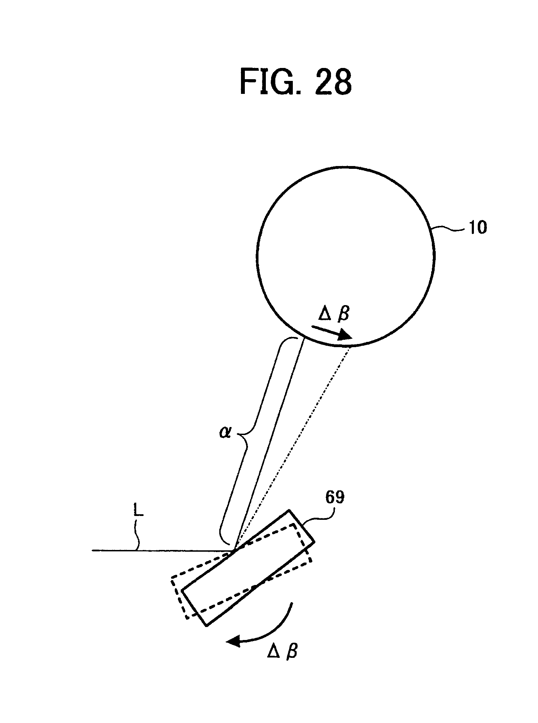

(1) Fig. 28 illustrates an exemplary method of displacing or rotating the return mirror 69 shown in Fig. 4 to displace a beam irradiated position. In Fig. 28, the angle of the return mirror 69 is varied to change the position on the photosensitive drum 10 at which the light beam is irradiated. In such a configuration, a relatively long light path $\alpha$ permits the beam irradiated position $\Delta\beta$ to largely move with respect to a change in angle $\Delta\theta$ of the return mirror 69. Thus, this alternative exhibits good optical characteristics at a low cost, but is poor in control capabilities.

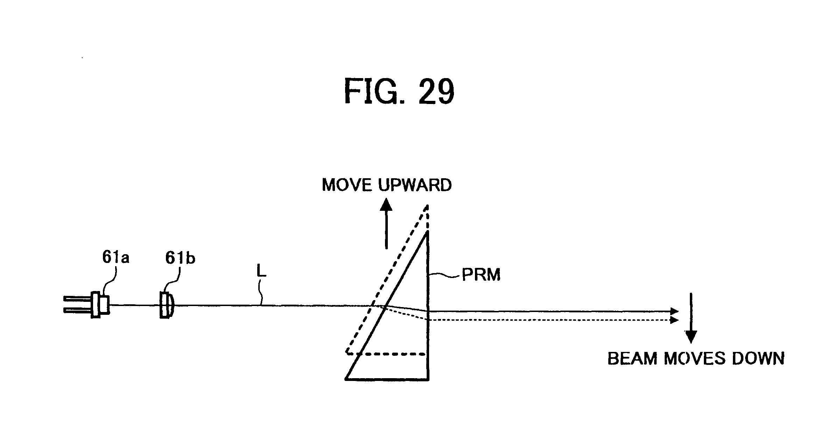

(2) Fig. 29 illustrates an example in which a prism PRM inserted in a light path L is moved to change a position on the photosensitive drum at which the beam is irradiated. In this example, the prism PRM is moved in a direction orthogonal to the light path L to change the beam irradiated position. When the light beam is incident on an oblique side of the triangular prism PRM and exits from a surface perpendicular to the light path L, a movement of the prism PRM upward in Fig. 29 causes the light beam to move downward, as indicated by dotted lines.

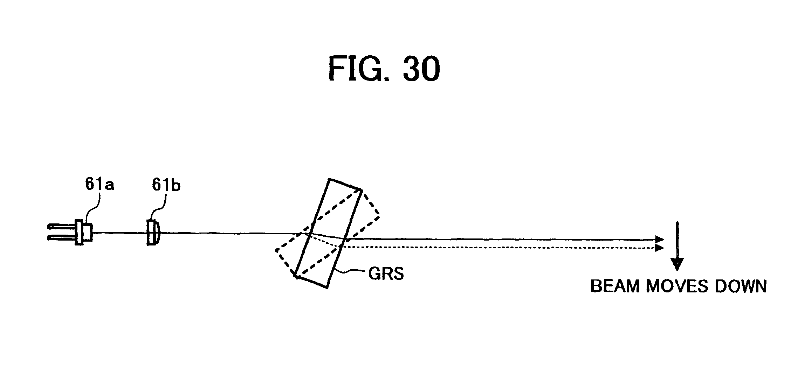

(3) Fig. 30 illustrates an example in which a glass plate GRS is inserted in the light path L, and the angle of the glass plate GRS to the light path L is varied to change a position on the photosensitive drum 10 at which the beam is irradiated. In this example, as the angle of the glass plate GRS to the light path L is made larger, the beam is moved in a downward direction, as indicated by a dotted line in Fig. 30.

When an optics is inserted into the light path L to move the beam, the light path is changed by changing the length of the light path which passes through the glass, so that the beam diameter can be affected, and the prism will entail an additional cost, though high controllability is provided.

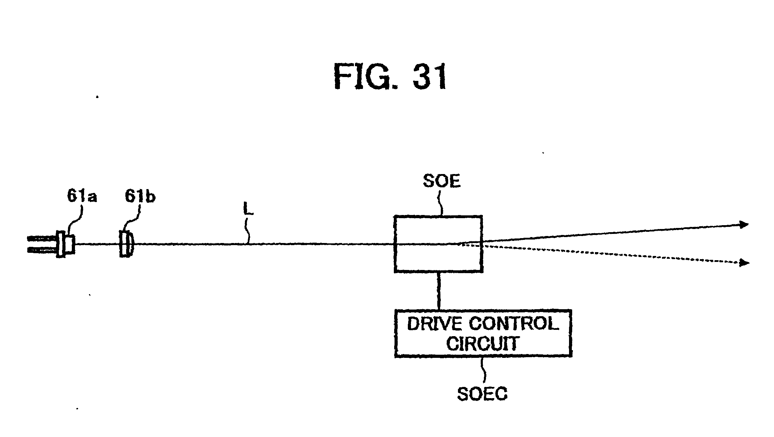

(4) Fig. 31 illustrates an example in which an acousto-optical element SOE inserted in the light path L is driven by a drive control circuit SOEC with high harmonics to change a beam irradiated position. The acousto-optical element SOE comprises a comb-shaped electrode vapor-deposited on $LiNbO_3$ which relies on the light diffraction phenomenon to deflect, and drives with high harmonics. While this example is suitable for a rapid position control, the cost is inevitably increased. Alternatively, an opto-electric element or a liquid crystal may be used to deflect the beam instead of the acoustic-optical element SOE. The opto-electric element relies on a photoelastic effect to deflect a beam, while the liquid crystal relies on the light diffraction phenomenon to deflect a beam. While both are suitable for a rapid position control as is the case with the acousto-optical element SOE, they are disadvantageous over the other examples in terms of the cost.

In an image forming apparatus which irradiates a photosensitive drum with a laser beam to form an image, when a beam irradiated position is controlled to correct a color shift due to fluctuations in the rotational speed of the photosensitive drum, a belt or the like, it is necessary to smoothly and slowly control the beam irradiated position in small correction increments. This is because an instantaneous large movement of the beam irradiated position causes a large change in scanning line intervals, resulting in a defective image such as blanking. From the foregoing point of view, the aforementioned method (4) is not suitable for a color shift correction as proposed by the present invention, and also increases the cost. The aforementioned method (1) in turn is problematic in terms with the correction accuracy, and will encounter difficulties in solving problems such as the blanking. Though presenting a good accuracy control, the aforementioned methods (2), (3) can adversely affect the optical characteristics as compared with the first to fourth embodiments of the present invention, and entails a higher cost than the foregoing embodiments.

As mentioned above, a color shift is caused by fluctuations in the rotational speed of the photosensitive drum or transfer belt. However, this type of fluctuations has a periodicity and a good repeatability, so that the fluctuations in the rotational speed may be previously measured and used by the color shift amount calculation circuit 110 to calculate a color shift correction value which is then stored in the memory 121. When a print instruction is output, a color shift can be corrected using the stored correction value. In addition, if the stored color shift correction value can be confirmed on an operation panel or on a printer driver and can be changed by a user or service personnel, the color shift can be corrected in a more strict way.

Numerous additional modifications and variations are possible in light of the above teachings. It is therefore to be understood that within the scope of the appended claims, the disclosure of this patent specification may be practiced otherwise than as specifically described herein.

This patent specification is based on Japanese patent application, No. JPAP2002-239622 filed on August 20, 2002 in the Japanese Patent Office, the entire contents of which are incorporated by reference herein.

A color shift correcting method is provided for accurately correcting a color shift caused by fluctuations in the rotational speed of an image carrier or an intermediate transfer belt at a low cost without the need for employing a driving motor rotation controller or an encoder. In an image forming apparatus, images in different colors are formed by at least one image forming unit having an image carrier. The images in different colors are directly or indirectly transferred onto a movable element to form a final image. A position irradiated with a laser beam emitted from an optical writing unit is adjusted in the sub-scanning direction, while the laser beam is irradiated to form a latent image, to correct a color shift among the respective colors.

**Claims**

1. A color shift correcting method for correcting a color shift due to misregistration of images in different colors, when a color image is formed by developing latent images written onto associated image carriers by optical writing means, and directly or indirectly transferring the developed images in different colors onto a movable element, said method comprising the step of:

   adjusting a position on said image carrier irradiated with the optical beam emitted from said optical writing means in a sub-scanning direction to correct a color shift among the respective color images while the light beam is being irradiated from said optical writing means on said image carriers to form the latent images on said image carriers.

2. A color shift correcting method according to claim 1, wherein said step of adjusting a position on said image carrier irradiated with the optical beam in the sub-scanning direction includes reading a pattern written on said image carriers before starting the adjustment for detecting the color shift among the developed images, and adjusting the position at which the optical beam is irradiated based on the result of reading the pattern.

3. A color shift correcting method according to claim 2, wherein a timing at which said pattern is written is set based on a timing at which a reference point provided on said image carrier is detected.

4. A color shift correcting method according to claim 2, wherein a timing at which said pattern is written is set based on a timing at which a reference point provided on an intermediate transfer element is detected.

5. A color shift correcting method according to claim 1, wherein said step of adjusting a position on said image carrier irradiated with the optical beam in the sub-scanning direction includes the steps of correcting a timing at which said optical writing means writes the image, and correcting the position of the light beam, said steps being executed in parallel.

6. A color shift correcting method according to claim 5, wherein:

   said step of correcting the write timing includes correcting a portion corresponding to a quotient derived by dividing the amount of misregistration by a dot pit; and
   said step of correcting the beam position includes correcting a portion corresponding to a residual resulting from the division of the misregistration amount by the dot pitch.

7. An optical writing apparatus, comprising:

   optical writing means for irradiating image carriers with optical beams based on input image information for performing optical writing to form images in a plurality of colors; and
   adjusting means for adjusting a position on each of said image carriers at which an optical beam emitted from said optical writing means is irradiated such that the light beam irradiated positions match with one another when the images in the respective colors are superimposed.

8. An optical writing apparatus according to claim 7, wherein:

   said optical writing means includes a laser light emitting element and a coupling optical system, and
   said adjusting means comprises a holding member for integrally holding said laser light emitting element and said coupling optical system, and a driving mechanism for moving said holding member in the sub-scanning direction.

9. An optical writing apparatus according to claim 8, further comprising an optical housing for holding an optical deflector and other optics for irradiating said image carriers with light beams, said holding member being supported in said optical housing for rotation about an axis such that said holding member is eccentric to an optical axis of the light beam.

10. An optical writing apparatus according to claim 9, wherein said driving mechanism drives said holder means for rotation about said axis.

11. An optical writing apparatus according to claim 9, wherein said optical axis of the light beam is eccentric to the axis of rotation of said holding member such that said optical axis of the light beam matches said axis of rotation of said holding member at a light beam deflecting position of said optical deflector.

12. An optical writing apparatus according to claim 8, wherein said holding member comprises guide members parallel with the sub-scanning direction of said image carriers in said optical housing for holding the optical deflector and the other optics for irradiating said image carriers with light beams, said holding member being supported for movement along said guide members.

13. An optical writing apparatus according to claim 12, wherein said driving mechanism translates said holding member along said guide members.

14. An optical writing apparatus according to claim 12, wherein said guide members have a curvature which is set such that the optical axis of the light beam substantially matches at a light beam deflecting position of said optical deflector when the light beam is moved.

15. An image forming apparatus comprising:

   at least one image forming means having an image carrier for forming images in different colors;

a movable element for receiving the images in different colors formed by said image forming means directly or indirectly transferred thereto; and
an optical writing apparatus according to any of claims 7 to 14.

16. An image forming apparatus according to claim 15, further comprising:

color shift amount detecting means for detecting the amount of color shift based on a plurality of patterns formed on said movable element,

wherein said adjusting means makes an adjustment based on the amount of color shift detected by said color shift amount detecting means to correct a color shift.

17. An image forming apparatus according to claim 15, further comprising:

a reference position mark provided for detecting a rotating phase of said image carrier;
detecting means for detecting said reference position mark; and
processing means for detecting the amount of color shift on a color-by-color basis on said movable element based on a position at which said reference position mark is detected to calculate a color shift correction value corresponding to each of the colors;

wherein said adjusting means adjusts a position on an image carrier corresponding to each color at which the light beam is irradiated based on the detected reference position mark and a plurality of calculated color shift correction amounts during formation of an image to correct the color shift.

18. An image forming apparatus according to claim 15, further comprising:

a reference position mark provided for detecting a rotating phase on said movable element;
detecting means for detecting said reference position mark; and
processing means for detecting the amount of color shift on a color-by-color basis on said movable element based on a position at which said reference position mark is detected to calculate a color shift correction value corresponding to each of the colors;

wherein said adjusting means adjusts a position on an image carrier corresponding to each color at which the light beam is irradiated based on the detected reference position mark and a plurality of calculated color shift correction amounts during formation of an image to correct the color shift.

19. An image forming apparatus according to claim 17, wherein said adjusting means comprises:

a write timing control circuit for controlling a timing at which the light beam is irradiated onto each image carrier based on the reference position mark on said image carrier and the plurality of calculated color shift correction values; and
a beam position control circuit for controlling a position at which the light beam is irradiated.

20. An image forming apparatus according to claim 19, wherein:

said write timing control circuit receives a quotient derived by dividing a misregistration amount by a dot pitch, and modulates a laser light emitting element based on the quotient; and
said beam position control circuit receives a residual resulting from the division of the misregistration amount by the dot pitch, and moves the optical housing based on the residual.

21. An image forming apparatus according to claim 17 or 18, further comprising:

a memory for storing the plurality of color shift correction values; and
reading means for reading the plurality of color shift correction values stored in said memory.

# FIG. 1

# FIG. 2

# FIG. 3

EP 1 424 609 A2

FIG. 4

# FIG. 5A

61
61a 61b

SUB-SCANNING
DIRECTION

MOVE
UPWARD

61a 61b

62b

10a

# FIG. 5B

61a 61b

62b

10a

61a 61b

61

EP 1 424 609 A2

# FIG. 6

MAIN SCANNING DIRECTION

# FIG. 7

# FIG. 8

# FIG. 9

EP 1 424 609 A2

# FIG. 10A

Y    C    M    K    PN

# FIG. 10B

11

12

13

FIG. 11

## FIG. 12

**REGISTRATION CONTROLLER** (100)

- 130 — SENSOR CONTROL CIRCUIT
- 38 — COLOR SHIFT SENSOR
- 140Y — COUNTER Y
- 140M — COUNTER M
- 140C — COUNTER C
- 110 — COLOR SHIFT AMOUNT CALC CIRCUIT
- 120 — COLOR SHIFT CORRECTION VALUE PROCESSING CIRCUIT
- 121 — MEMORY

**SYSTEM CONTROLLER** (200)

- 210 — BEAM POSITION CONTROL CIRCUIT
- 220 — MOTOR DRIVER
- 230 — WRITE TIMING CONTROL CIRCUIT
- 240 — LD MODULATION CIRCUIT

- MOTOR Y — 70Y
- MOTOR M — 70M
- MOTOR C — 70C
- LD Y — 61aY
- LD M — 61aM
- LD C — 61aC
- LD Bk — 61aK

EP 1 424 609 A2

# FIG. 13

```
        ┌─────────────────────────┐
        │  CALCULATE COLOR SHIFT  │
        │    CORRECTION VALUES    │
        └────────────┬────────────┘
                     │           S101
        ┌────────────▼────────────┐              S110
        │          i = 1          │    ┌──────────────────────────┐
        └────────────┬────────────┘    │   CORRECT COLOR SHIFT    │
   S102              │                  │   USING COLOR SHIFT      │
        ┌────────────▼────────────┐◄────│   CORRECTION VALUES      │
        │   WRITE COLOR SHIFT     │     │      D1, D2, D3          │
        │   DETECTION PATTERN     │     └──────────────────────────┘
        └────────────┬────────────┘
                     │           S103
        ┌────────────▼────────────┐
        │   DEVELOP AND TRANSFER  │
        └────────────┬────────────┘
                     │           S104
        ┌────────────▼────────────┐
        │   READ PATTERN IMAGE    │
        └────────────┬────────────┘
                     │           S105
        ┌────────────▼────────────┐
        │  CALCULATE COLOR SHIFT  │
        │  AMOUNTS K1i, K2i, K3i  │
        └────────────┬────────────┘
                     │           S106
        ┌────────────▼────────────┐
        │  PROCESS COLOR SHIFT    │
        │  CORRECTION VALUES      │
        │     D1i, D2i, D3i       │
        └────────────┬────────────┘
                     │           S107
        ┌────────────▼────────────┐
        │   STORE COLOR SHIFT     │
        │   CORRECTION VALUES ;   │
        │      D1 ← D1i           │
        │      D2 ← D2i           │
        │      D3 ← D3i           │
        └────────────┬────────────┘
                     │           S108                    S109
        ┌────────────▼────────────┐  NO  ┌──────────────────────────┐
        ◄     A > D1i, D2i, D3i    ─────►│        i = i + 1         │
        └────────────┬────────────┘      └──────────────────────────┘
                     │ YES
        ┌────────────▼────────────┐
        │           END           │
        └─────────────────────────┘
```

# FIG. 14

START IMAGE FORMATION

S201

READ COLOR SHIFT CORRECTION
VALUES

S202

SEPARATE COLOR SHIFT
CORRECTION VALUE AT LEADING
END OF IMAGE INTO TIMING
CONTROL CORRECTION VALUE AND
BEAM IRRADIATED POSITION
CORRECTION VALUE

S203

START WRITING BASED ON COLOR
SHIFT CORRECTION VALUE

END IMAGE FORMING

FIG. 15

EP 1 424 609 A2

# FIG. 16

ONE ROTATION OF DRUM

FIG. 17

# FIG. 18

CALCULATE COLOR SHIFT
CORRECTION VALUES

S101

i = 1

S110

CORRECT COLOR SHIFT
USING COLOR SHIFT
CORRECTION VALUES
D1, D2, D3

S120

DETECT PHOTOSENSITIVE
DRUM REF POSITION

S102

WRITE COLOR SHIFT
DETECTION PATTERN

S103

DEVELOP AND TRANSFER

S104

READ PATTERN IMAGE

S105

CALCULATE COLOR SHIFT
AMOUNTS K1i, K2i, K3i

S106

PROCESS COLOR SHIFT
CORRECTION VALUES ;
D1i, D2i, D3i

S107

STORE COLOR SHIFT
CORRECTION VALUES ;
D1 ← D1i
D2 ← D2i
D3 ← D3i

S108

$A > D1i, D2i, D3i$   NO

S109

i = i + 1

YES

END

# FIG. 19

START IMAGE FORMATION

S201

READ COLOR SHIFT
CORRECTION VALUES

S202

SEPARATE COLOR SHIFT
CORRECTION VALUES AT LEADING
END OF IMAGE INTO TIMING
CONTROL CORRECTION VALUE AND
BEAN IRRADIATED POSITION
CORRECTION VALUE

S210

DETECT PHOTOSENSITIVE DRUM
REFERENCE POSITION

S203

START WRITING BASED ON
COLOR SHIFT CORRECTION VALUES

END IMAGE FORMATION

# FIG. 20

EP 1 424 609 A2

# FIG. 21

EP 1 424 609 A2

# FIG. 22

**100 — REGISTRATION CONTROLLER**

- 39 — BELT REFERENCE POSITION SENSOR
- 38 — COLOR SHIFT SENSOR
- 130 — SENSOR CONTROL CIRCUIT
- 140Y — COUNTER Y
- 140M — COUNTER M
- 140C — COUNTER C
- 110 — COLOR SHIFT AMOUT CALC CIRCUIT
- 120 — COLOR SHIFT CORRECTION VALUE PROCESSING CIRCUIT
- 121 — MEMORY

**200 — SYSTEM CONTROLLER**

- 210 — BEAM POSITION CONTROL CIRCUIT
- 220 — MOTOR DRIVER
- 230 — WRITE TIMING CONTROL CIRCUIT
- 240 — LD MODULATION CIRCUIT

- MOTOR Y — 70Y
- MOTOR M — 70M
- MOTOR C — 70C
- LD Y — 61aY
- LD M — 61aM
- LD C — 61aC
- LD Bk — 61aK

EP 1 424 609 A2

# FIG. 23

CALCULATE COLOR SHIFT
CORRECTION VALUES

S101
i = 1

S110
CORRECT COLOR SHIFT
USING COLOR SHIFT
CORRECTION VALUES
D1, D2, D3

S130
DETECT BELT
REFERENCE POSITION

S102
WRITE COLOR SHIFT
DETECTION PATTERN

S103
DEVELOP AND TRANSFER

S104
READ PATTERN IMAGE

S105
CALCULATE COLOR SHIFT
AMOUNTS K1i, K2i, K3i

S106
PROCESS COLOR SHIFT
CORRECTION VALUES ;
D1i, D2i, D3i

S107
STORE COLOR SHIFT
CORRECTION VALUES ;
D1 ← D1i
D2 ← D2i
D3 ← D3i

S108
A > D1i, D2i, D3i    NO

S109
i = i + 1

YES

END

# FIG. 24

```
  ┌─────────────────────────────┐
  │     START IMAGE FORMATION    │
  └─────────────────────────────┘
                │
                ▼                        S201
  ┌─────────────────────────────┐
  │       READ COLOR SHIFT       │
  │      CORRECTION VALUES       │
  └─────────────────────────────┘
                │
                ▼                        S202
  ┌─────────────────────────────┐
  │     SEPARATE COLOR SHIFT     │
  │  CORRECTION VALUES AT LEADING│
  │   END OF IMAGE INTO TIMING   │
  │ CONTROL CORRECTION VALUE AND │
  │   BEAN IRRADIATED POSITION   │
  │       CORRECTION VALUE       │
  └─────────────────────────────┘
                │
                ▼                        S220
  ┌─────────────────────────────┐
  │         DETECT BELT          │
  │      REFERENCE POSITION      │
  └─────────────────────────────┘
                │
                ▼                        S203
  ┌─────────────────────────────┐
  │     START WRITING BASED ON   │
  │ COLOR SHIFT CORRECTION VALUES│
  └─────────────────────────────┘
                │
                ▼
  ┌─────────────────────────────┐
  │      END IMAGE FORMATION     │
  └─────────────────────────────┘
```

# FIG. 25

# FIG. 26

SUB-SCANNING DIRECTION

L

MAIN SCANNING
DIRECTION

# FIG. 27

61h

R

# FIG. 28

# FIG. 29

MOVE UPWARD

61a    61b    L    PRM

BEAM MOVES DOWN

EP 1 424 609 A2

# FIG. 30

EP 1 424 609 A2

61a 61b

GRS

BEAM MOVES DOWN

# FIG. 31

61a   61b

L

SOE

DRIVE CONTROL
CIRCUIT

SOEC

EP 1 424 609 A2